# EUROPEAN PATENT SPECIFICATION

(11) **EP 4 012 257 B1**
(45) Date of publication and mention of the grant of the patent: **20.09.2023**
(21) Application number: 21212723.7
(22) Date of filing: 07.12.2021
(51) Int. Cl.: F22B 37/58, E04G 7/28, E04G 7/06, F28D 21/00, F28F 9/00, F28F 9/013, E04G 1/04, E04G 7/08, E04G 7/22

(54) **A SUPPORT, A PLATFORM, AND A METHOD FOR INSPECTING AND/OR MAINTAINING A TUBE HEAT EXCHANGER**
TRÄGER, PLATTFORM UND VERFAHREN ZUR INSPEKTION UND/ODER WARTUNG EINES ROHRWÄRMETAUSCHERS
SUPPORT, PLATE-FORME, ET PROCÉDÉ D'INSPECTION ET/OU DE MAINTENANCE D'UN ÉCHANGEUR DE CHALEUR À TUBE

(30) Priority: 08.12.2020 FI 20206261
(43) Date of publication of application: 15.06.2022
(73) Proprietor: Valmet Technologies Oy, 02150 Espoo (FI)
(72) Inventor: YLIRÖNNI, Henry, 33900 TAMPERE (FI); HURRI, Pekka, 33900 TAMPERE (FI); SARELIN, Oliver, 33900 TAMPERE (FI); SAARELA, Juho, 33900 TAMPERE (FI)
(74) Representative: Berggren Oy

(56) References cited:
- EP-A1- 3 363 965
- CA-A1- 2 466 983
- US-A- 4 757 258
- US-A1- 2016 340 918

## Description

### Technical field

The invention relates to accessing heat exchangers tubes. The invention relates to inspecting and/or maintaining heat exchangers comprising tubes. The invention relates to inspecting and/or maintaining heat exchangers comprising vertical tubes. The invention relates to inspecting and/or maintaining heat exchangers, such as superheaters, of a boiler, such as a chemical recovery boiler or a bubbling fluidized bed boiler.

### Background

A boiler, such as a chemical recovery boiler or a bubbling fluidized bed boiler, is a large building comprising heat exchangers, such as economizers and superheaters for the purpose of boiling water, and generating superheated steam, and typically also electricity using the steam. The heat exchangers typically comprise heat exchanger tubes. Such heat exchanger tubes are in many boilers arranged at a top of a furnace of the boiler. Such heat exchangers need to be inspected, and optionally maintained, periodically. Thus, the heat exchanger tubes need to be accessed. The inspector or the operator needs to enter the furnace to access the heat exchanger tubes. The inspector or operator may enter the furnace e.g. by hanging from ropes fixed to a roof of the boiler. Inspecting the heat exchanger while hanging from ropes is not comfortable and poses safety risks. If the rope fails, the fall from the level of the heat exchangers may be of the order of tens of metres to the bottom of the boiler. Typically, the heat exchanger tubes are vertical, because this reduces mechanical shear stress caused by gravity to the tubes.

Document EP 3 363 965 A1 discloses a clamp for a scaffolding according to the prior art but fails to disclose the support for an inspection platform as defined in claim 1.

Document US 2016/340918 A1 discloses an example of a platform for a scaffolding comprising telescopic supportive bars.

Document CA 2 466 983 A1 discloses another example of a platform for a scaffolding.

Consequently, a safe and reliable way for accessing heat exchanger tubes for inspecting and/or maintaining heat exchangers is needed.

### Summary

The inventors have found that a properly dimensioned clamp can be attached to a substantially vertical heat exchanger tube such that, on one hand the load bearing capacity of the clamp is sufficient for the purpose of accessing the heat exchanger, and on the other hand, forces between the clamp and the heat exchanger tube remain sufficiently low for not damaging the heat exchanger tube by the clamp. The clamp is connectable to a tube of a heat exchanger from a side of the tube. The clamp is disclosed in more specific terms in claim 1.

Two such clamps can be fixed to two heat exchanger tubes (one to each tube), whereby a supportive bar can be attached to each one of the two clamps to form a support for inspecting and/or maintaining a heat exchanger. However, in a heat exchanger arrangement, particularly of a boiler, a distance between two heat exchanger tubes may vary from time to time. This happens e.g. because of thermal expansion and/or other deformation caused by e.g. by varying temperature, vibrations, or gravitational stress. The inventors have found that supportive bar may be formed as a telescopic bar, whereby its length can be adapted precisely to fit the distance between the two clamps. Such a support has been disclosed in more specific terms in claim 10.

Such a support can be used e.g. to hold a hoist or a tackle for lifting objects to the needed location. At least two such supports can be used to support a board or a plank, whereby the inspector/operator may stand on the platform formed by the board or the plank and the supports. Thus, a platform for inspecting and/or maintaining a heat exchanger comprises a pair of supports and a board or a plank. Such a platform has been disclosed in more specific terms in claim 12.

A method for inspecting and/or maintaining a heat exchanger comprises fixing the two clamps of the support to two heat exchanger tubes and the supportive bar to the clamps to form the support for inspecting and/or maintaining the heat exchanger. Thereafter, the support is used for inspection and/or maintenance. Thus, the heat exchanger can be accessed from the platform. Such a method has been disclosed in more specific terms in claim 13.

Other claims define preferable embodiments. The description and figures disclose these and other embodiments.

### Brief description of the drawings

- Fig. 1a: shows in a perspective view an embodiment of a clamp,
- Fig. 1b: shows the clamp of Fig. 1a attached to a vertical heat transfer tube,
- Fig. 1c: shows a top view of the clamp of Fig. 1a,
- Fig. 1d: shows a side view of the clamp of Fig. 1a,
- Fig. 2a: shows in a perspective view a primary part of the clamp of Fig. 1a such that a convex side of the primary part faces the reader,
- Fig. 2b: shows in a perspective view a primary part of the clamp of Fig 1a such that a concave side of the primary part faces the reader,
- Fig. 3a: shows in a perspective view a secondary part of the clamp of Fig 1a such that a concave part of the secondary part faces the reader,
- Fig. 3b: shows the secondary part of Fig. 3b together with further measures thereof,
- Fig. 4a: shows in a top view a support comprising a pair or clamps and a supportive bar,
- Fig. 4b: shows a tertiary first part of the support of Fig. 4a,
- Fig. 4c: shows a tertiary second part of the support of Fig. 4a,
- Fig. 4d: shows in a perspective view the supportive bar of Fig. 4a,
- Fig. 4e: shows in a perspective view another embodiment of a supportive bar usable in connection with a pair of clamps,
- Fig. 4f: shows in a perspective view another embodiment of a supportive bar usable for lifting objects,
- Fig. 4g: shows compressive forces between the clamp and the heat exchanger tube and fixing forces of fasteners of a clamp, when the clamp is fixed to the heat exchanger tube,
- Fig. 5a: shows in a perspective view a part of a platform for maintain a heat exchanger, the platform having a pair of clamps, the supportive bar of Fig. 4e, and a pair on planks on the supportive bar,
- Fig. 5b: shows in a perspective view a platform for maintain a heat exchanger, the platform having two pairs of clamps, a pair of supportive bars, and planks arranged on the supportive bars,
- Fig. 6: shows a boiler having a heat exchanger comprising a heat exchanger tube,
- Fig. 7a: shows a second embodiment of a clamp, and
- Fig. 7b: shows a third embodiment of a clamp.

### Detailed description

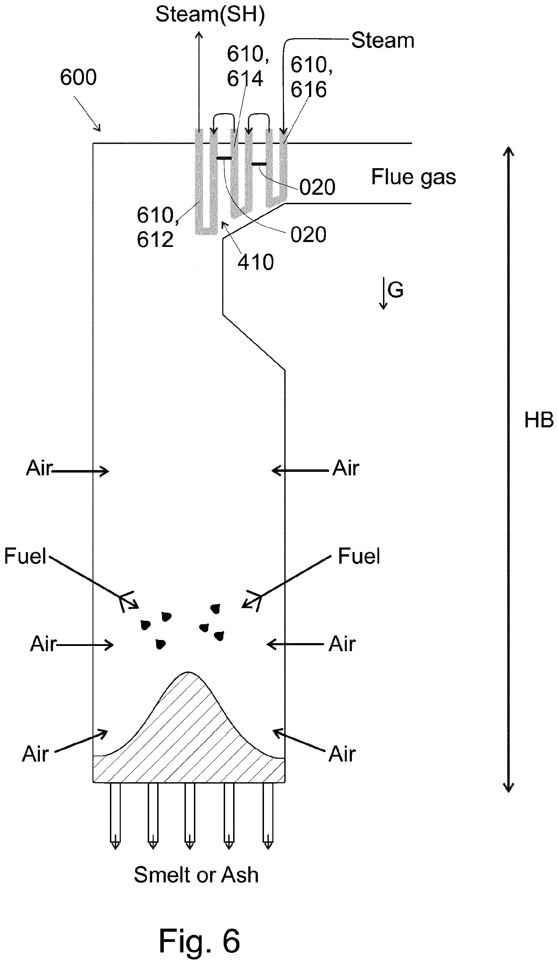

Fig. 6 shows a boiler 600. The boiler comprises superheaters 610, such as a first 612, a second 614, and a third 616 superheater. A superheater receives steam (e.g. saturated steam, "Steam"), and from a superheater, superheated steam ("Steam(SH)") is received. A superheater 610 comprises a bundle of heat exchanger tubes. A boiler may comprise also other heat exchangers with tubes, such as economizers (not shown). Typically the superheaters 610 are arranged at a top of the boiler 600. The arrow G shows a direction of gravity. A height HB of the boiler may be in the range of 50 m to 100 m. Both fuel and air are fed to the boiler 600 to burn the fuel. Ash or smelt is removed from the boiler.

It has been found that a heat exchanger of the boiler 600, e.g. a superheater 610 of the boiler 600, may be inspected and/or maintained by installing a support 020 in between two heat exchanger tubes. For example, Fig. 6 shows a first superheater 612 and a second superheater 614, which are located relative to each other in such a way that the inspector or operator may enter a space in between these superheaters 612, 614. Each one of the superheaters 612, 614 may form a separate (i.e. distant) set of heat exchanger tubes (e.g. arranged in series flow-wise); and each superheater may comprise a bundle of heat exchanger tubes (i.e. tubes arranged close to each other and in parallel both geometrically and flow-wise). This applies also to the pair of the second 614 and a third superheater 616. For supporting the inspector/operator, a support 020 has been installed in between the first and second superheaters 612, 614; and another a support 020 has been installed in between the second and third superheaters 614, 616. Details of the support 020 will be discussed later. The support 020 can be used also in connection with other heat exchangers, such as economizers.

The boiler 600 of Fig. 6 is a chemical recovery boiler 600. The problem of inspecting/maintaining the heat exchanger is particularly hard in a chemical recovery boiler, because the heat exchangers need to be inspected reasonably often, and a height HB of such a boiler is typically from the upper end of the range given above. This applies also for a bubbling fluidized bed boiler.

In a chemical recovery boiler, a waste liquor of a pulp process (e.g. black liquor or brown liquor) is used as the fuel; and smelt is removed from the lower part of the recovery boiler. Correspondingly, a chemical recovery boiler comprises liquor injection guns for feeding the liquor (i.e. fuel in Fig. 6) into a furnace of the boiler 600; and smelt spouts for removing smelt from the chemical recovery boiler 600.

In contrast, from a bubbling fluidized bed boiler, ash is withdrawn, as detailed in Fig. 6. A bubbling fluidized bed boiler (BFB) typically does not comprise liquor injection guns. Instead a BFB comprises means for feeding the fuel to the furnace of the BFB. Typically, the fuel used in a BFB is solid fuel. Moreover, a BFB comprises means for feeding the fluidizing gas (e.g. air) to the furnace of the BFB to form a fluidized bed therein.

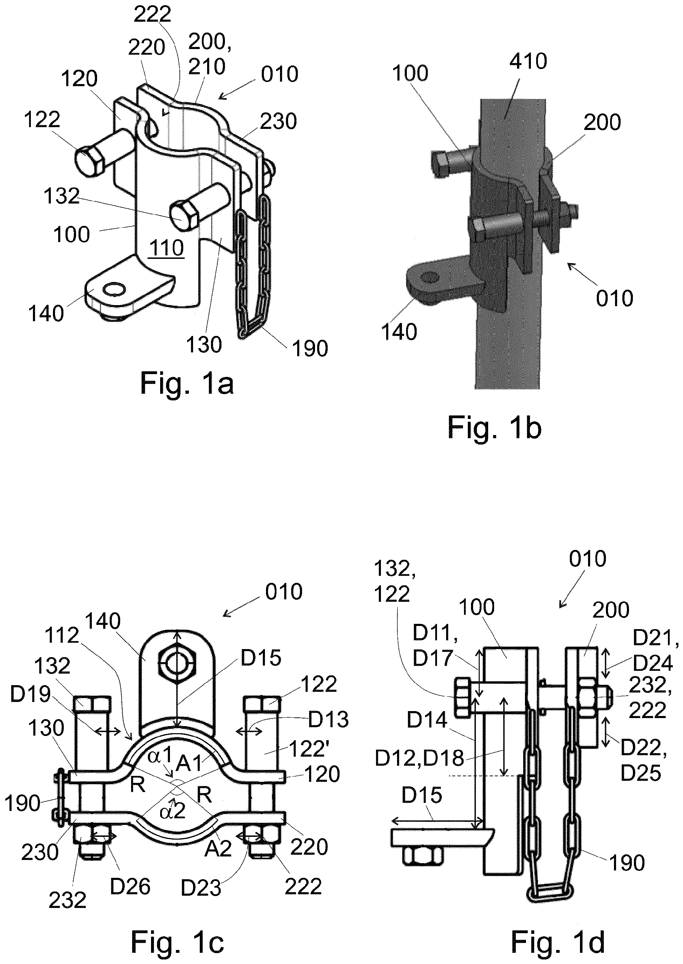

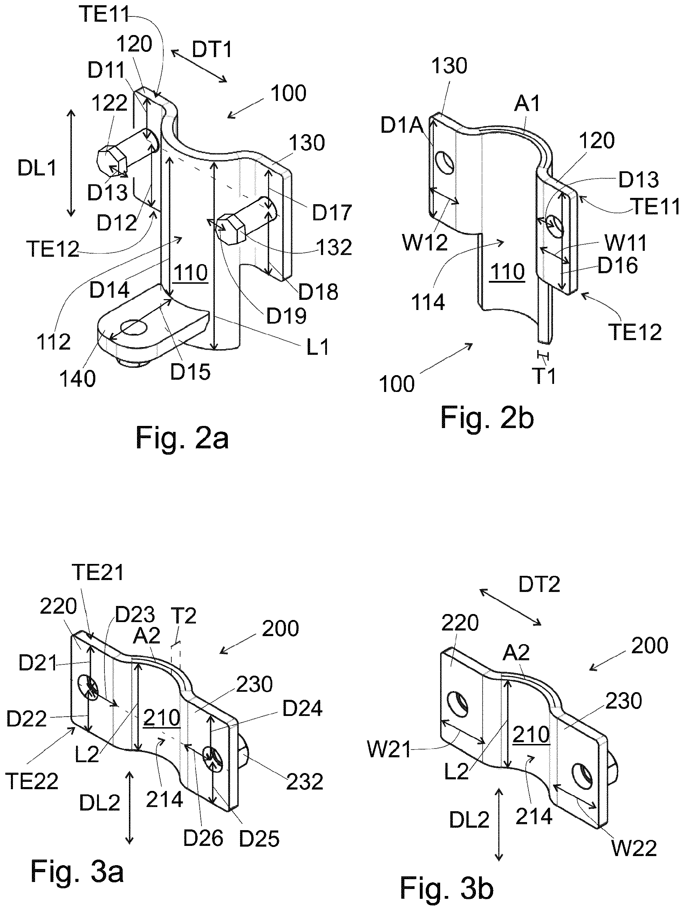

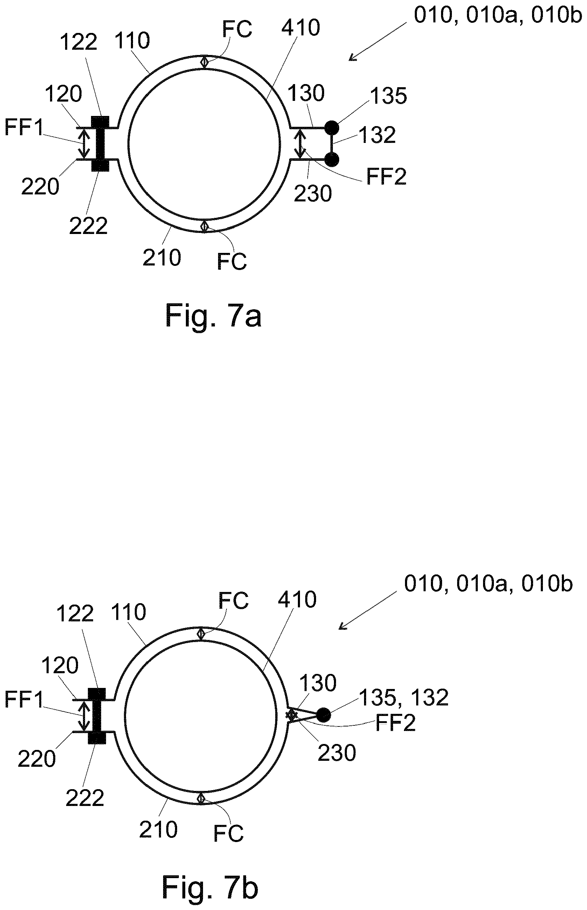

As detailed above, the support 020 is formed of two clamps 010 and a supportive bar 300. The two clamps may be identical. A first embodiment of the clamp 010 is detailed in Figs. 1a to 3b, a second embodiment in Fig. 7a, and a third embodiment in 7b.

Referring to Fig. 1b the clamp 010 is connectable to a cylindrical tube 410, in particular a heat exchanger tube 410. The clamp 010 is connectable to the tube 410 from a side of the tube 410. Thus, at least one side of the clamp is openable. However, because of the harsh installation environment, preferably the clamp is formed as only one piece. In other words, parts of the clamp are preferable not detachable from each other without tools. This has the benefit that objects do not fall to a bottom of the boiler, which would need further maintenance. This applies in particular to (a) a primary part 100 and a secondary part 200, which are connected to each other, and (b) a primary first fastener 122, which is connected to the primary part 100.

Referring to Fig. 1a, the clamp 010 comprises a primary part 100 and a secondary part 200. When the clamp 010 is in an open position (i.e. detached from the tube 410 and attachable from a side to the tube 410), the primary part 100 may be fixed to the secondary part 200 by a connector 190 (see Fig. 1a and 1d) or by a hinge 135 (see Figs. 7a and 7b). Figs. 1a to 1d show the clamp 010 in a closed position.

Figs. 2a and 2b show only the primary part 100 of the clamp 010. The primary part 100 comprises a primary semi-tubular portion 110 extending in a primary longitudinal direction DL1. A first purpose of the primary semi-tubular portion 110 is to connect, by a frictional force, the primary part 100 to the tube 410. A second purpose of the primary semi-tubular portion 110 is level out the pressure caused by the clamp 010 to the tube 410 so as not to damage the tube 410 itself. Levelling out point loads to form only distributed loads is important when applying clamps to heat exchanger tubes. Therefore, the clamp 010 may be designed such that the concave side 114 of the primary semi-tubular portion 110 has a radius that corresponds to an outer radius of the heat transfer tube 410 to which the clamp is intended to be attached. Thus, a cross section of the primary semi-tubular portion 110 defines a primary circular arc A1 of a circle having a radius R (see Fig. 1c). Preferably, the primary semi-tubular part 110 is symmetric about a plane that comprises the primary longitudinal direction DL1. A symmetric shape of the primary semi-tubular part 110 improves the distribution of load between the clamp 010 and the tube 410.

The primary part 100 comprises a primary first flat portion 120 along a first side of the primary semi-tubular portion 110 and a primary second flat portion 130 along a second side of the primary semi-tubular portion 110, the second side being opposite to the first side. Thus, the primary semi-tubular portion 110 is arranged in between the primary flat portions 120, 130 in a primary transversal direction DT1.

The primary first flat portion 120 extends in the primary longitudinal direction DL1 between a first transversal end TE11 of the primary first flat portion 120 and a second transversal end TE21 of the primary first flat portion 120. The primary first flat portion 120 is substantially parallel to such a tangential plane of the primary semi-tubular portion 110 that comprises a mid-point of the primary circular arc A1. If the primary semi-tubular part 110 is symmetric about a plane that comprises the primary longitudinal direction DL1, the mid-point is arranged on the plane of symmetry. An angle between the plane of the primary first flat portion 120 and the tangential plane (as discussed above) may be e.g. at most 10 degrees. A small angle helps fixing a primary first fastener 122 of the clamp 010 to a secondary first fastener 222 of the clamp 010. Moreover a small angle helps to maintain a gap in between the primary and secondary flat portions 120, 220 even when the primary first fastener 122 is tightened. A width of the gap between the flat portions 120, 220, in use, may be e.g. 1 mm to 10 mm, such as bout about 5 mm. Such a gap is shown, without a reference numeral, e.g. in Figs. 1c and 1d.

The primary second flat portion 130 extends in the primary longitudinal direction DL1 between a first transversal end of the primary second flat portion 130 and a second transversal end of the primary second flat portion 130. The primary second flat portion 130 is preferably substantially parallel to such a tangential plane of the primary semi-tubular portion 110 that comprises a mid-point of the primary circular arc A1. What has been said above about the orientation of the primary first flat portion 120 relative to the tangential plane applies to the orientation of the primary second flat portion 130 *mutatis mutandis.* However, referring to Fig. 7b, the primary second flat portion 130 needs not be parallel or substantially parallel to the tangential plane. Preferably, the primary first flat portion 120 and the primary second flat portion 130 form parts of a plane (i.e. they belong to same plane).

A first purpose of the flat portions 120, 130 is to attach and tighten the primary semi-tubular portion 110 to a secondary semi-tubular portion 210. A second purpose of the flat portions 120, 130 is to level out the force caused by a primary first fastener 122 to the primary first flat portion 120. This also levels out the stress caused by the primary first flat portion 120 to the primary semi-tubular portion 110. In order to properly level out the stress caused by the clamp 010 a length L1 of the primary semi-tubular portion 110 in the primary longitudinal direction DL1 is at least 5 cm. The length L1 may be e.g. 5 cm - 25 cm, such as 10 cm - 20 cm.

To attach the parts 100, 200 of the clamp together, the primary part 100 comprises a primary first fastener 122 arranged on the primary first flat portion 120. The primary first fastener 122 is configured to fasten the primary first flat portion 120 to a secondary first flat portion 220 of the secondary part 200 of the clamp 010. The primary first fastener 122 is openable. The openability of the primary fastener 122 ensures that the clamp 010 can be fixed to the tube from the side of the tube 410. E.g. when the clamp 010 is being fitted to the tube, the tube 410 may be placed from between the primary first flat portion 120 of the primary part 100 and a secondary first flat portion 220 of the secondary part 200. In addition, the openability of the primary fastener ensures that the clamp 010 is detachable from the tube 410 after the inspections and/or maintenance has been completed.

The primary part 100 comprises a primary second fastener 132 arranged on the primary second flat portion 130 and configured to fasten or fastening the primary second flat portion 130 to a secondary second flat portion 230 of the clamp 010. Referring to Figs. 1a to 1d, the primary second fastener 132 may be formed of a nut and a bolt, which, when opened, are configured to fasten the primary second flat portion 130 to a secondary second flat portion 230 of the clamp 010 by tightening the nut or the bolt. Referring to Fig 7b, the primary second fastener 132 may be a hinge 135, which fastens the primary second flat portion 130 to a secondary second flat portion 230 of the clamp 010. Referring To Fig. 7a, the primary second fastener 132 may be rod or plate between two hinges 135, which fasten the primary second flat portion 130 to a secondary second flat portion 230 of the clamp 010.

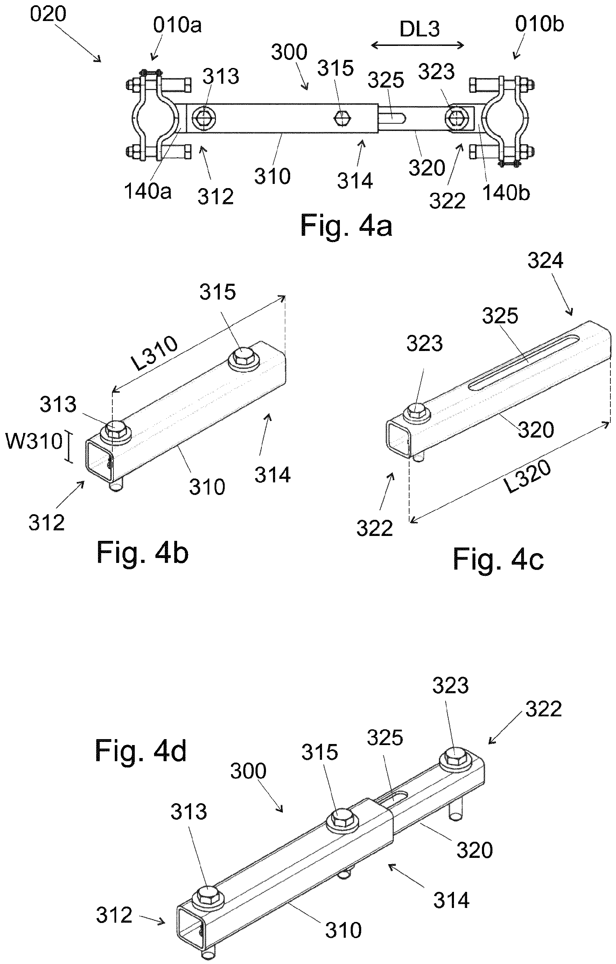

The primary part 100 comprises an attachment 140. The attachment 140 is for the purpose of attaching a supportive bar 300 (see Fig. 4a) to the clamp 010. The attachment 140 is arranged on a convex side 112 of the primary semi-tubular portion 110. Preferably, a centre of the attachment 140 is arranged, in the primary transversal direction DT1, at a centre of the primary semi-tubular portion 110 (i.e. on a longitudinal central line), as indicated in Figs. 1a to 1d and 2a. If the primary semi-tubular part 110 is symmetric about a plane that comprises the primary longitudinal direction DL1, the centre of the attachment 140 may be arranged on the plane of symmetry. When a centre of the attachment 140 is arranged at the centre of the primary semi-tubular portion 110, the load caused by the supportive bar 300 is evenly distributed on sides of the primary semi-tubular portion 110. This is beneficial for distributing the load caused by the supportive bar 300.

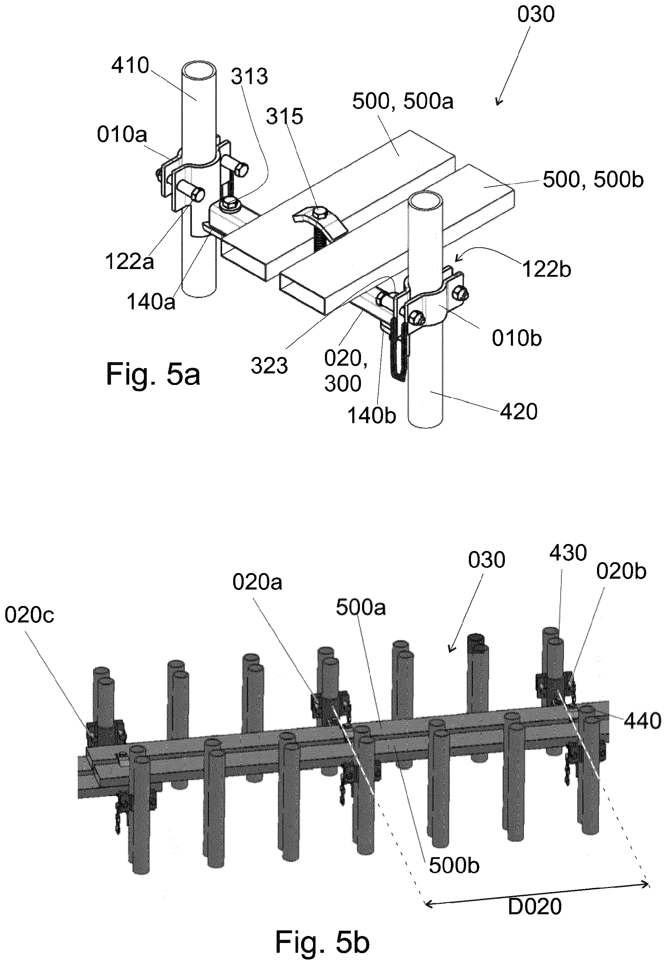

A distance D14 (hereinbelow a primary fourth distance) between the centre of the primary first fastener 122 and the attachment 140 in the primary longitudinal direction DL1 is at least 4 cm. On one hand, this diminishes the torque caused by the supportive bar 300 via the attachment 140 to the clamp 010; in this way also levelling out the stress. Moreover, the distance D14 ensures that if the clamp 010 would start to slide along the tube 410, the clamp would wedge itself to the tube 410, thereby preventing the clamp 010 from falling. This is important for safety reasons for the inspector/operator. The primary fourth distance D14 may be e.g. at least 6 cm. An upper limit for the primary fourth distance D14 is set by the length L1 of the primary semi-tubular portion 110. As indicated in Figs. 1b and 5a, in use, the attachment 140 may be arranged below the primary first fastener 122.

The attachment 140 protrudes from the convex side 112 of the primary semi-tubular portion 110 a distance D15 (hereinbelow a primary fifth distance). The primary fifth distance D15 is at least 25 mm. This ensures that the supportive bar 300 can be turned, at least to some extent, relative to the clamp 010 about an axis that is parallel to the primary longitudinal direction DL1. This improves usability of the support 020 (see below), because the inspector/operator then needs not to align the attachment 140 of the clamp 010 with an attachment 140b of another clamp 010b to form the support 020. The primary fifth distance D15 may be 25 mm - 150 mm, such as 40 mm - 80 mm.

The secondary part 200 of the clamp 010 is depicted in Figs. 1a to 1d, 3a, and 3b. The secondary part 200 comprises a secondary semi-tubular portion 210 extending in a secondary longitudinal direction DL2. When the clamp 010 is fixed to the tube 410, the primary longitudinal direction DL1 is parallel to the secondary longitudinal direction DL2, which is parallel to longitudinal central axis of the tube 410. Thus, in use (e.g. when the clamp 010 is fixed to the tube 410), the primary longitudinal direction DL1 is configured to be parallel to the secondary longitudinal direction DL2. For similar reasons as discussed above for the primary semi-tubular portion 100, a cross section of the secondary semi-tubular portion 210 defines a secondary circular arc A2 of a circle having the radius R (see Fig. 1c). Particularly, the same circle defines the radii of the primary circular arc A1 and the secondary circular arc A2. Preferably, the secondary semi-tubular part 210 is symmetric about a plane that comprises the secondary longitudinal direction DL2. A symmetric shape of the secondary semi-tubular part 210 improves the distribution of load between the clamp 010 and the tube 410.

For similar reasons as discussed above for the primary semi-tubular portion 110, a length L2 of the secondary semi-tubular portion 210 in the secondary longitudinal direction DL2 is at least 4 cm. The length L2 may be 4 cm - 20 cm, such as 5 cm - 15. Preferably, the length L2 of the secondary semi-tubular portion 210 is less than the length L1 of the primary semi-tubular portion 110. This reduces weight of the clamp. Moreover, the length L2 may be shorter than L1, since the secondary part 200 needs not comprise an attachment 140 for a bar.

The secondary part 200 comprises a secondary first flat portion 220 along a first side of the secondary semi-tubular portion 210 and a secondary second flat portion 230 along a second side of the secondary semi-tubular portion 210, the second side being opposite to the first side. Thus, secondary semi-tubular portion is arranged, in a secondary transversal direction DT2, between the secondary flat portions 220, 230.

The secondary first flat portion 220 extends in the secondary longitudinal direction DL2 between a first transversal end TE21 of the secondary first flat portion 220 and a second transversal end TE21 of the secondary first flat portion 220. The secondary first flat portion 220 is substantially parallel to such a tangential plane of the secondary semi-tubular portion 210 that comprises a mid-point of the secondary circular arc A2. If the secondary semi-tubular part 210 is symmetric about a plane that comprises the secondary longitudinal direction DL2, the mid-point is arranged on the plane of symmetry. An angle between the plane of the secondary first flat portion 220 and the tangential plane (as discussed above) may be e.g. at most 10 degrees. What has been said about the angle of the plane of the primary first flat portion 120 applies *mutatis mutandis.* Preferably, the planes of the primary and secondary first flat portions 120, 220 are parallel in use.

The secondary second flat portion 230 extends in the secondary longitudinal direction DL2 between a first transversal end of the secondary second flat portion 230 and a second transversal end of the secondary second flat portion 230. The secondary second flat portion 230 is preferably substantially parallel to such a tangential plane of the secondary semi-tubular portion 210 that comprises a mid-point of the secondary circular arc A2. What has been said above about the orientation of the secondary first flat portion 220 relative to the tangential plane applies to the orientation of the secondary second flat portion 230 *mutatis mutandis.* However, referring to Fig. 7b, the secondary second flat portion 230 needs not be parallel or substantially parallel to the tangential plane. Preferably, the secondary first flat portion 220 and the secondary second flat portion 230 form parts of a plane (i.e. they belong to same plane).

The secondary part 200 comprises a secondary first fastener 222 arranged on the secondary first flat portion 220. The secondary first fastener 222 is configured to function with the primary first fastener 122. Thus, the primary first fastener 122 is attachable to secondary first fastener 222. As indicated above, the primary first fastener 122 is also detachable from secondary first fastener 222. Thus, the primary first fastener 122 is connectable to the secondary first fastener 222 and detachable therefrom such that the clamp 010 is connectable to the cylindrical tube 410 from a side of the cylindrical tube 410.

A function of the flat portions 120, 130, 220, 230 is to provide a support for the fasteners 122, 132, 222 (and 232, if applicable). They may also be designed in view of distributing load from the fasteners to the semi-tubular parts 110, 210.

Therefore, in order to properly distribute the load caused by the first fastener 122, the first fastener 112 is arranged a distance D13 apart from the primary semi-tubular portion 110. Moreover, to distribute the load in the primary longitudinal direction DL1, the transversal ends of the first flat portion 120 are arranged distances (D11, D12) apart from the first fastener 122. Reference is made to Figs. 1c, 1d, 2a, and 2b.

More specifically, in a preferable embodiment, a primary first distance D11 between a first transversal end TE11 of the primary first flat portion 120 and a centre of the primary first fastener 122 in the primary longitudinal direction DL1 is at least 2 cm. The primary first distance D11 is defined as a minimum distance between the centre of the primary first fastener 122 and the first transversal end TE11 of the primary first flat portion 120. The primary first distance D11 may be e.g. 2 cm - 10 cm, such as 2 cm - 5 cm.

In a similar manner, a primary second distance D12 between a second transversal end TE12 of the primary first flat portion 120 and the centre of the primary first fastener 122 in the primary longitudinal direction DL1 is preferably at least 2 cm. The primary second distance D12 may be e.g. 2 cm - 10 cm, such as 2 cm - 5 cm. The primary second distance D12 is defined as a minimum distance between a centre of the primary first fastener 122 and the second transversal end TE12 of the primary first flat portion 120.

Furthermore, a primary third distance D13 between the centre of the primary first fastener 122 and the primary semi-tubular portion 110 is preferably at least 5 mm. The primary third distance D13 may be e.g. 5 mm - 30 mm, such as 1 cm - 2 cm. The primary third distance D13 is defined as a minimum distance between the centre of the primary first fastener 122 and any part of the primary semi-tubular portion 110 (see Fig. 1c). The primary third distance D13 may be so large that the whole primary first fastener 122 (optionally including the bushing 122' of Fig. 1c) is arranged on only the primary first flat portion 120; and, correspondingly, does not contact the primary tubular portion 110 (see Fig. 1c).

Hereinabove, the term "centre of the primary first fastener 122" refers to a centre of a projection of the primary first fastener 122 onto the primary first flat portion 120 (see Figures). The measures D11, D12, D13 are given from the centre, since the primary first fastener 122 itself may level out the stress, if it is sufficiently large. E.g. a large bolt levels out stress more than a small bolt.

The lower limits for these measures help mainly to level out the stress. The upper limit mainly helps to keep the weight of the clamp reasonably low. In practice the lightness of the clamp is also important, since clamps need to be carried in the harsh environment near the heat exchanger tubes.

For similar reasons as discussed in connection with the primary first fastener 122, the secondary first fastener 222 is arranged between the transversal ends of the secondary first flat portion 220 and preferably, a certain distance therefrom.

More specifically, in a preferable embodiment, a secondary first distance D21 between a first transversal end TE21 of the secondary first flat portion 220 and a centre of the secondary first fastener 222 in the secondary longitudinal direction DL2 is at least 2 cm. The secondary first distance D21 may be e.g. 2 cm - 10 cm, such as 2 cm - 5 cm.

Moreover, a secondary second distance D22 between a second transversal end TE22 of the secondary first flat portion 220 and a centre of the secondary first fastener 222 in the secondary longitudinal direction DL2 is at least 2 cm. The secondary second distance D12 may be e.g. 2 cm - 10 cm, such as 2 cm - 5 cm.

Finally, a secondary third distance D23 between a centre of the secondary first fastener 222 and the secondary semi-tubular portion 210 is at least 5 mm. The secondary third distance D23 may be e.g. 5 mm - 30 mm, such as 1 cm - 2 cm. The secondary third distance D23 may be so large that the whole secondary first fastener 222 is arranged on only the secondary first flat portion 220; and, correspondingly, does not contact the secondary tubular portion 210 (see Fig. 1c).

Hereinabove, the term "centre of the secondary first fastener 222" refers to a centre of a projection of the secondary first fastener 222 onto the secondary first flat portion 220 (see Figures). Moreover, the secondary first distance D21 is defined as a minimum distance between the secondary first fastener 222 and the first transversal end TE21 of the secondary first flat portion 220; and the secondary second distance D22 is defined as a minimum distance between the centre of the secondary first fastener 222 and the second transversal end TE22 of the secondary first flat portion 220; and secondary third distance D23 is defined as a minimum distance between the centre of the secondary first fastener 222 and any part of the secondary semi-tubular portion 210.

In a preferable embodiment, the primary first fastener 122 and the secondary first fastener 222 in combination comprise a first nut and a first bolt. Thus, the primary first flat portion 120 is attachable to the secondary first flat portion 220 by screwing the first bolt to the first nut. Moreover, the primary first flat portion 120 is detachable from the secondary first flat portion 220 by unscrewing the first bolt or the first nut. Thus, the primary first fastener 122 may comprise a first nut and the secondary first fastener 222 may comprise a first bolt; or the primary first fastener 122 may comprise a first bolt and the secondary first fastener 222 may comprise a first nut. However, preferably the primary first fastener 122 comprises a bolt and the secondary first fastener 222 comprises a nut, because in such a case the clamp 010 is more easily attachable to the tube 410, at least when the nut is fixed to the secondary flat portion 220. When fastening the clamp, the primary part 100 faces the inspector/operator, while the second part 200 (and the fastener 222 thereof) may remain behind the first part 100.

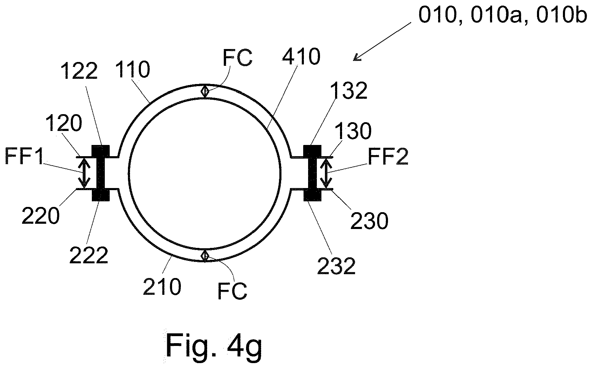

The pair of fasteners 122, 222 in combination comprising the first nut and the first bolt has the beneficial effect that a compressive force FC (see Fig. 4g) between the clamp 010 and the heat exchanger tube 410 is controllable by controlling the torque by which the first bolt is attached to the first nut. The compressive force should be controllable, because on one hand, sufficiently high compressive force FC is needed to generate sufficient friction between the clamp 010 and the tube 410; and on the other hand sufficiently low compressive force FC is needed not to damage the tube 410. Preferable values for the compressive force FC will be detailed below.

Preferably, the first nut has been fixed, e.g. welded, to the primary first flat portion 120 or the secondary first flat portion 220. Correspondingly, the first bolt is connected to the secondary first flat portion 220 or the primary first flat portion 120, respectively. Thus, the primary first flat portion 120 is detachable from the secondary first flat portion 220 by unscrewing the first bolt. Preferably, the first bolt is connected to the secondary 220 or primary 120 first flat portion such that the first bolt is not detachable therefrom by unscrewing the first bolt. This has the effect that the first nut and the first bolt are not detachable from the clamp 010 by unscrewing. This is because the first nut is fixed (e.g. welded), whereby it cannot be unscrewed, and the connection of the first bolt is made such that the first bolt does not detach from the connection by unscrewing. Thus, even by unscrewing the first bolt, the first bolt does not fall to the bottom of the boiler e.g. when detaching the clamp 010 from the tube 410.

Preferably, for the reasons indicated above, the first nut has been welded to the secondary first flat portion 220 and the first bolt is connected to the primary first flat portion 120. Figs 1c and 1d show the secondary first fastener 222, which in these figures is a nut welded to the secondary first flat portion 220. Furthermore, figure 1c shows the primary first fastener 122, which in this figure is a first bolt connected by a busing 122' to the primary first flat portion 120. The bushing 122' and/or the first bolt may be threaded in such a manner that unscrewing the first bolt does not detach it from the busing 122'. The busing 122' may be welded to the primary first flat portion 120. In such a case, the primary first fastener 122 comprises the first bolt and the busing 122'.

Referring to Figs. 7a and 7b, the secondary part 200 needs not comprise another fastener at least when the secondary second flat portion 230 is pivotably connected to the primary second flat portion 130. In such a case one or more hinges 135 may be applied. However, having a hinge or hinges has the detrimental effect that the fixing forces FF1 and FF2 on the flat portions 120, 220, 130, 230 are not well balanced (see Fig. 4g for the fixing forces FF1 and FF2). The fixing forces FF1 and FF2 induce the compressive force FC, and if the fixing forces are not balanced, too large compressive forces FC may occur locally between the clamp 010 and the tube 410.

Referring to Figs. 1a to 3c, in a preferable embodiment, the secondary part 200 comprises a secondary second fastener 232 arranged on the secondary second flat portion 230 and configured to function with the primary second fastener 132. Thus, the primary second fastener 132 is attachable to secondary second fastener 232. Preferably, the primary second fastener 132 and the secondary second fastener 232 in combination comprise a second nut and a second bolt. Thus, the primary second flat portion 130 is attachable to the secondary second flat portion 230 by screwing the second bolt to the second nut, and the primary second flat portion 130 is detachable from to the secondary second flat portion 230 by unscrewing the second bolt or the second nut.

Preferably, the second nut is fixed, e.g. welded, to the to the primary second flat portion 130 or the secondary second flat portion 230 (more preferably to the secondary second flat portion 230) and the second bolt is connected to the secondary second flat portion 230 or the primary second flat portion 130, respectively (more preferably to the primary second flat portion 130), such that the second bolt is not detachable from the secondary second flat portion 230 or the primary second flat portion 130, respectively, by unscrewing the second bolt. E.g. in Fig. 1c, the secondary second fastener 232 is a second nut, and the primary second fastener 132 is a second bolt. What has been said about the nut and bolt attachment of the primary and secondary first flat portions 120, 220 with the first nut and the first bolt applies *mutatis mutandis.*

However, in such a case, the primary part 100 could be detached from the secondary part 200 by unscrewing both the first bolt/nut and the second bolt/nut. Therefore, this embodiment preferably comprises a connector 190 connecting the primary part 100 to the secondary part 200. Thus, only the primary 100 part or the secondary 200 part cannot fall from the hand of the inspector/operator. Instead, if holding only one of the parts 100, 200 of the clamp 010, the other part 200, 100 would be held, too, via the connector 190. For its technical function, the connector 190 can be fixed at any place of the first part 100 and at any place of the second part 200. However depending on the fixing locations, the length of the connector 190 could become considerable, which would increase weight. Thus, in a preferable embodiment, the connector 190 connects the primary second flat portion 130 of the primary part 100 to the secondary second flat portion 230 of the secondary part 200 (see Fig. 1a). In this way, a short connector 190 suffices even if arranging the tube 410 to its place from between the first flat portions 120, 220 is possible.

What has been said above about distributing the load caused by the primary and secondary first fasteners 122, 222 via the first flat portions 120, 220 applies, *mutatis mutandis,* to the second flat portions 130, 230.

Therefore, in an embodiment, in the primary part 100, a primary seventh distance D17 between a first transversal end (not shown with a reference) of the primary second flat portion 130 and the centre of the primary second fastener 132 in the primary longitudinal direction is at least 2cm. The preferable values of the primary first distance D11 are applicable as preferable values for the primary seventh distance D17. Moreover, a primary eighth distance D18 between a second transversal end (not shown with a reference) of the primary second flat portion 130 and the centre of the primary second fastener 132 in the primary longitudinal direction is at least 2 cm. The preferable values of the primary second distance D12 are applicable as preferable values for the primary eighth distance D18. Finally, a primary third ninth D19 distance between the centre of the primary second fastener 132 and the primary semi-tubular portion 110 is at least 5 mm. The preferable values of the primary third distance D13 are applicable as preferable values for the primary ninth distance D19. What has been said about the definitions of the distance between the transversal ends and the centres; and the definition of the centre in connection with the primary first fastener 122 applies *mutatis mutandis* to the primary second fastener 132.

Concerning the secondary part 200, therein a secondary fourth distance D24 between a first transversal end (not shown with a reference) of the secondary second flat portion 230 and the centre of the secondary second fastener 232 in the secondary longitudinal direction DL2 is at least 2 cm. The preferable values of the secondary first distance D21 are applicable as preferable values for the secondary fourth distance D24. Moreover, a secondary fifth distance D2 between a second transversal end (not shown with a reference) of the secondary second flat portion 230 and the centre of the secondary second fastener 232 in the secondary longitudinal direction DL2 is at least 2 cm. The preferable values of the secondary second distance D22 are applicable as preferable values for the secondary fifth distance D25. Finally, a secondary sixth distance D26 between the centre of the secondary second fastener 232 and the secondary semi-tubular portion 210 is at least 5 mm. The preferable values of the secondary third distance D23 are applicable as preferable values for the secondary sixth distance D26. What has been said about the definitions of the distance between the transversal ends and the centres; and the definition of the centre in connection with the secondary first fastener 222 applies *mutatis mutandis* to the secondary second fastener 232.

Preferably, the secondary second distance D22 equals a secondary fourth distance D24 (see Fig. 3a). In such a case, and if the primary first fastener 122 is configured to be attached alternatively to the secondary second fastener 232, the secondary part 200 can be turned 180 degrees about a horizontal axis without affecting the properties of the clamp 010. This improves robustness of the clamp 010. In such a case, more preferably, all the distances D22, D21, D24, and D25 of Fig. 3a are equal.

As for the connections between the primary semi-tubular portion 110 and the tube 410, and the secondary semi-tubular portion 210 and the tube 410, in order to level out the compressive force, preferably a contact area of each one of the semi-tubular portions is larger. In addition to the lengths L1, L2 of the parts, the contact area is defined by the amount that the semi-tubular portions 110, 210 encircle the tube 410. Therefore, referring to Fig. 1c, in a preferable embodiment, the primary circular arc A1 extends an angle α1 that is at least 90 degrees and less than 180 degrees as seen from a centre of the circle forming the primary circular arc A1. Moreover, the secondary circular arc A2 extends an angle α2 that is at least 90 degrees and less than 180 degrees as seen from a centre of the circle forming the secondary circular arc A2. The circle defining the circular arcs A1, A2 is shown in Fig. 1c. In addition, the radius R of the circle is shown therein. In addition the angle α1 of extension of the primary arc A1 has been shown. Moreover, the angle α2 of extension of the secondary arc A2 has been shown. Preferably, a sum α1 + α2 of the angles α1 and α2 of extension is from 270 degrees to 330 degrees, such as 290 to 310 degrees. The lengths 5 cm ≤ L1 ≤ 20 cm and 5 cm ≤ L2 ≤ 15 cm (see above) are especially beneficial in connection with these values of these angles.

The clamp 010 is configured to be fixed to a heat exchanger tube 410. Typically, an outer diameter of a superheater tube 410 is of the order of from 30 mm to 100 mm. The radius R or the arcs A1, A2 may be slightly more than half the diameter of the tube, e.g. due to a thickness of the parts 100, 200. However, preferably, the radius R defining the arcs A1, A2 is from 15 mm to 60 mm, such as from 15 mm to 40 mm.

In order for the parts 100, 200 of the clamp 010 to be sufficiently sturdy for carrying the supportive bar 300 and to be firmly fixed to the tube 410, the material itself needs to be sufficiently sturdy, and a thickness of the parts 100, 200 should be sufficient. More specifically, in an embodiment, the primary semi-tubular portion 110 is made from a material having a yield strength of at least 300 MPa at 20 °C. The material may be steel. However not all types of steel have this high a Yield strength. Moreover, a primary thickness T1 of the primary semi-tubular portion 110 is 4 mm - 16 mm, such as 6 mm - 12 mm. The thickness T1 is shown in Fig. 2b. Preferably, the primary first flat portion 120, the primary semi-tubular portion 110, and the primary second flat portion 130 are made from a piece of a metal sheet by cutting and bending. Thus these parts (120, 110, 130) may be equally thick and made from the same material, e.g. steel.

Moreover, the secondary semi-tubular portion 210 is made from a material having a yield strength of at least 300 MPa at 20 °C. The material may be steel. Moreover, a secondary thickness T2 of the secondary semi-tubular portion 210 is 4 mm - 16 mm, such as 6 mm - 12 mm. The thickness T2 is shown in Fig. 3a. Preferably, the secondary first flat portion 220, the secondary semi-tubular portion 210, and the secondary second flat portion 230 are made from a piece of a metal sheet by cutting and bending. Thus these parts (220, 210, 230) may be equally thick. Also, the primary semi-tubular portion 110 may be as thick as the secondary semi-tubular portion 210.

In a typical use, the tube 410 is substantially vertical. Therefore, a coefficient of friction between the clamp and the tube should be sufficiently high. A sufficiently high coefficient of friction can be provided in a reliable manner by not coating the concave sides 114, 214 of the semi-tubular portions 110, 210. Some coating could decrease the coefficient of friction. Some other coating could increase the coefficient of friction, but would reduce reliability, since a coating may tear off from the surface in use. Thus, in a preferable embodiment, a concave side 114 of the primary semi-tubular portion 110 is free from a coating and a concave side 214 of the secondary semi-tubular portion 210 is free from a coating. Thus preferably, these sides 114, 214 are not e.g. painted.

There are also some further measures that can be used to reduce the weight of the clamp. For example, as shown in Figs. 2a and 2b, the primary flat portions 120, 130 of the primary part 100 need not be as long as the primary semi-tubular portion 110. In terms of fixing, a lengthier flat portions would be acceptable, but in terms of weight, the structure of Figs. 2a and 2b is preferable. Thus, with reference to Figs. 2a and 2b, in an embodiment, a primary sixth distance D16 between the first transversal end TE11 of the primary first flat portion 120 and the second transversal end TE21 of the primary first flat portion 120 is 30 % - 90 % of the length L1 of the primary semi-tubular portion 110. More preferably, a ratio (D16/L1) of the primary sixth distance D16 to the length L1 is 40%-80% or 45%-70%. Preferably also a primary tenth distance D1A (see Fig. 2b) between the first transversal end of the primary second flat portion 130 and the second transversal end of the primary second flat portion 130 is 30 % - 90 % of the length L1 of the primary semi-tubular portion 110. The preferable values for the ration D16/L1 apply for the ratio D1A/L1.

Moreover, even if a width of the flat portions 120, 130, 220, 230 does not play a major role in the supporting and/or load distributing effect, wide flat portions unnecessarily increase the weight. Thus, preferably a primary first width W11 of the primary first flat portion 120 is 15 mm - 40 mm, a primary second width W12 of the primary second flat portion 130 is 15 mm -40 mm, a secondary first width W21 of the secondary first flat portion 220 is 15 mm - 40 mm, and a secondary second width W22 of the secondary second flat portion 230 is 15 mm -40 mm. Preferably the primary first width W11 equals the primary second width W12. The width W11 is defined along the plane of the primary first flat portion 120 and transverse to the primary longitudinal direction DL1. The width W12 is defined along the plane of the primary second flat portion 130 and transverse to the primary longitudinal direction DL1. Preferably the secondary first width W21 equals the secondary second width W22. The width W21 is defined along the plane of the secondary first flat portion 220 and transverse to the secondary longitudinal direction DL2. The width W22 is defined along the plane of the secondary second flat portion 230 and transverse to the secondary longitudinal direction DL2.

The clamp 010, i.e. a first clamp 010a, can be used to form a support 020. In addition, a second clamp 010b is needed, and a supportive bar 300 is arranged between the clamps 010a, 010b. The support is shown in Fig. 4a. The first and second clamps 010a, 010b are preferably identical. Details have been discussed above for the clamp 010 which can serve either as the first or the second clamp.

The supportive bar 300 comprises a tertiary first part 310 and a tertiary second part 320. Embodiments of the supportive bar are shown in Figs. 4d to 4f; and the whole support 020 is shown in Fig. 4a. The tertiary first part 310 is shown in Fig. 4b; and the tertiary second part 320 is shown in Fig. 4c.

Referring to Figs. 4a and 4b, the tertiary first part 310 has a tubular shape extending in a tertiary longitudinal direction DL3. In use, the tertiary longitudinal direction DL3 may be perpendicular to the primary longitudinal direction DL1; e.g. substantially horizontal. The tertiary first part 310 has a tertiary first primary end 312 provided with a tertiary first fastener 313. The tertiary first fastener 313 is configured to be fastened to the attachment 140a of the first clamp 010a (see Fig. 4a). The attachment 140a of the first clamp 010a is precisely the attachment 140 of the clamp 010 as discussed above. Referring to Figs. 5a and 4b, in use, the tertiary first primary end 312 may be arranged on the attachment 140a of the first clamp 010a. Thus, the end 312 may be supported to the attachment 140a already before fastening the tertiary first fastener 313 thereto. This helps installing the support 300.

The tertiary first part 310 has a tertiary first secondary end 314, which is opposite to the tertiary first primary end 312. As shown in the figures, the shape of the tertiary first part 310 need not be circular-tubular. Preferably, the tertiary first part 310 has two side surfaces that are mutually parallel, and two other side surfaces that are mutually parallel (see Fig. 4b). A width W310 (see Fig. 4b) of each one of these side surfaces, as measured perpendicularly to the tertiary longitudinal direction DL3 may be 30 mm - 80 mm, such as 40 mm - 50 mm. Also preferably, two of these surfaces are perpendicular to each other, i.e. a cross section of the tertiary first part 310 is a square, optionally with rounded corners. A length L310 of the tertiary first part 310 is preferably in the range 20 cm - 50 cm, more preferably in the range 25 cm - 45 cm.

Referring to Fig. 4c, the tertiary second part 320 has a tubular shape extending in a longitudinal direction, which in use is parallel to the tertiary longitudinal direction DL3. Moreover, the tertiary second part 320 has a tertiary second primary end 322 provided with a tertiary second fastener 323. The tertiary second fastener 323 is configured to be fastened to the attachment 140b of the second clamp 010b. The attachment 140b of the second clamp 010b is precisely the attachment 140 of the other clamp 010 as discussed above. Referring to Figs. 5a and 4c, in use, the tertiary second primary end 322 may be arranged on the attachment 140b of the second clamp 010b. Thus, the end 322 may be supported to the attachment 140b already before fastening the tertiary second fastener 323 thereto. This helps installing the support 300.

The tertiary second part 320 has tertiary second secondary end 324, which is opposite to the tertiary second primary end 322. A length L320 of the tertiary second part 320 is preferably in the range 20 cm - 50 cm, more preferably in the range 25 cm -45 cm. This length, in combination with the length L310, ensures that a sufficiently long supportive bar 300 can be constructed from only to parts 310, 320.

As indicated in Figs. 4a and 4d to 4f, the tertiary second secondary end 324 of the tertiary second part 320 is arranged to be fitted inside the tertiary first secondary 314 end of the tertiary first part 310. Therefore, the shape of the tertiary second part 320 is preferably such that an outer surface of the tertiary second part 320 is geometrically congruent with an inner surface of the tertiary first part 310. In this way, the tertiary first part 310 is slidably connectable to the tertiary second part 320 so as to lengthen and shorten the supportive bar 300. As shown in the figures, the parts 310, 320 thus form a telescopic bar. This is important when accessing heat exchanges, as the distances between heat exchanger tubes may vary; whereby the distance between the two clamps 010a, 010b may also vary. Therefore, forming the supportive bar 300 as a telescopic bar ensures that the bar 300 can be used at various locations.

Because of the use environment, a risk of falling parts should be minimized. Therefore, preferably, the tertiary first 310 and second 320 parts are connectable to each other in such a way that they cannot be detached from each other without a tool. Therefore, preferably, the tertiary second secondary end 324 of tertiary second part 320 is provided with an aperture 325 and the tertiary first secondary end 314 of tertiary first part 320 is provided with a fixing member 315 configured to extend through the aperture 325. Thus, as the fixing member 315 extends through the aperture 325, the tertiary first part 310 is not detachable from the tertiary second part 320 without opening the fixing member 315. Therefore, the risk of falling parts is minimized. It suffices that the inspector/operator holds the supportive bar 300 only from one part 310, 320, and the other part 320, 310 does not fall because of the fixing member 315.

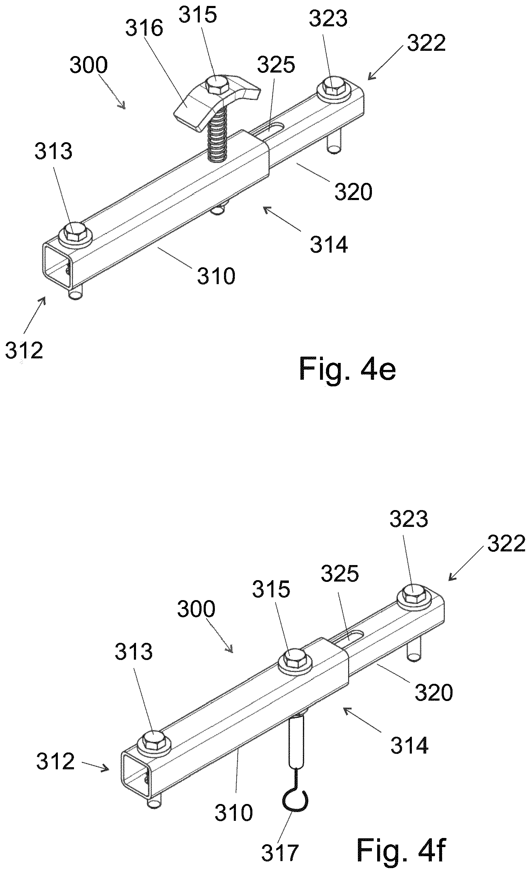

Structural details of the supportive bar may vary. Referring to Fig. 4d, the supportive bar 300 may be a simple bar without other functions. Thus, e.g. a rope or cable may be arranged to go around and/or above the supportive bar 300, and the rope/cable may be used for inspection/maintenance purposes. Referring to Fig. 4e, the fixing member 315 may be provided with an upper support 316. In use, the upper support 316 may be configured to support boards or planks 500 also from above, while the supportive bar 300 itself supports a board or a plank from below and forms a lower support for the board or the plank. The upper support 316 may be pivotable about a vertical axis so as to enable mantling and dismantling the board(s)/plank(s) 500. Referring to Fig. 4f, the fixing member 315 may be provided with hook 317. The hook 317 can be used e.g. to fix thereto a hoist or a tackle for lifting objects to the inspection/maintenance site.

At least two such supports 020 (i.e. a first support 020a and a second support 020b) can be used, in connection with at least one plank or board 500 to form a platform 030 for inspecting and/or maintaining a heat exchanger. Fig. 5a shows a parts of such a platform 030 having a first plank 500a and a second plank 500b. The plank or board 500 may be made of wooden material, plastic material, or metal. The plank or board 500 may be made of a composite or a laminate.

Figure 5b shows a platform 030 for inspecting and/or maintaining the heat exchanger. Fig. 5b shows multiple vertical heat exchanger tubes, wherein a clamp 010 as discussed above has been fixed to six tubes. The six clamps form the pair of clamps of three supports (020a, 020b, 020c). A first plank 500a and a second plank 500b is arranged on a first support 020a (or more precisely, on the supportive bar 300a of the first support 020a). The tubes on a first side of the planks 500a may be tubes of a first heat exchanger (e.g. the first superheater 612 of Fig. 6) and the tubes on an opposite second side of the planks 500a may be tubes of a second heat exchanger (e.g. the second superheater 614 of Fig. 6). Even if the platform 030 of Fig. 5a and 5b has two planks 500a, 500b; a platform 030 can be made using only one board or plank 500. In such a case, the simpler supportive bar 300 of Fig. 4d may be used as part of the platform 030.

However, it may be important to fix the board/plank 500 to the support 020, e.g. using the upper support 316. Preferably, two boards or planks 500 are used. Moreover, preferably a width of the boards/planks is selected such that a combined width of the two boards or planks 500 substantially matches the space available between the first and the second tubes 410, 420 (see Fig. 5b); or in other terms the combined width of the two boards or planks 500 substantially matches a length of the supportive bar 300. The term "substantially matches" allows for such gaps between the planks and the heat exchanger tubes of the heat exchanger, that a foot of the inspector/operator does not fit to the gap. E.g. a gap (or gaps) having a width of at most 50 mm is acceptable. Thus, a total width of the planks/boards may be e.g. at most 15 cm less than a length of the supportive bar 300a. Thus, a gap of 50 mm could remain between the two planks and between each one of the planks and the heat exchanger tubes. The upper support 316 (see above) ensures that the boards/planks are properly fixed to their place.

In use, the plank or the board 500 is substantially horizontal. Thus, an angle between a normal of a top surface of the plank or the board 500 may form an angle of at most 5 degrees with a vertical direction.

Because of the load-bearing capacity of the clamps 010, preferably a distance D020 (see Fig. 5b) between the first support 020a and the second support 020b is 60 cm - 300 cm. More preferably, the distance D020 is 75 cm - 200 cm.

The clamps 010, supports 020, and platforms 030 as discussed above may be used to for accessing a heat exchanger for inspection and/or maintenance thereof. The heat exchanger (e.g. superheater 612 of Fig. 6) comprises a first heat exchanger tube 410, to which a clamp 010, i.e. a first clamp 010a of a support 020 can be attached. The heat exchanger (e.g. superheater 612 of Fig. 6) or another heat exchanger (e.g. the superheater 614 of Fig. 6) comprises a second heat exchanger tube 420, to which a clamp 010, i.e. a second clamp 010b of a support 020 can be attached. In the method for inspecting and/or maintaining a heat exchanger, a support 020, i.e. a first support 020a, is arranged available.

The method comprises ensuring that the primary first fastener 122a of the first clamp 010a is open. If it is not, the step of ensuring involves opening the primary first fastener 122a of the first clamp 010a. The method comprises arranging the first heat exchanger tube 410 in connection with a concave part 114 (see Fig. 2b) of the primary semi-tubular portion 110 of the first clamp 010a and in connection with a concave part 214 (see Fig. 3b) of the secondary semi-tubular portion 210 of the first clamp 010a. Reference is made also to Fig. 1b. The tube 410 can be so arranged from between the first flat portions 120, 220 of the clamp 010, since the primary first fastener 122 is open. Moreover, a connector 190, at least if short, may have been fixed to the second flat portions 130, 230 as detailed above. The method comprises fastening the first clamp 010a to the first heat exchanger tube 410 by fastening the primary first fastener 122a of the first clamp 010a. For the reference numerals, see Fig. 5a.

The second clamp 010b is attached to the second tube 420 is a similar manner. Thus, the method comprises ensuring that the primary first fastener 122b of the second clamp 010b is open; arranging the second heat exchanger tube 420 in connection with a concave part of the primary semi-tubular portion of the second clamp 010b and in connection with a concave part of the secondary semi-tubular portion of the second clamp 010b; and fastening the second clamp 010b to the second heat exchanger tube 420 by fastening the primary first fastener 122b of the second clamp 010b.

In the method, a longitudinal direction of the first heat exchanger tube 410 is vertical or forms an angle of at most 30 degrees with a vertical direction. Moreover, a longitudinal direction of the second heat exchanger tube 420 is vertical or forms an angle of at most 30 degrees with a vertical direction. Furthermore, the clamps 010a, 010b are attached at substantially the same heights to the heat transfer tubes 410, 420.

The supportive bar 300 of the support 020 is attached to the clamps 010a, 010b. Preferably this is done after the clamps have been attached to the tubes. Thus, the method comprises fastening the tertiary first fastener 313 of the supportive bar 300 of the support 020 to the attachment 140a of the first clamp 010a and fastening the tertiary second fastener 323 of the supportive bar 300 to the attachment 140b of the second clamp 010b. The support 020 can be used according to needs. Thus, the method comprises inspecting and/or maintaining the heat exchanger using the support 020, in particular the supportive bar 300 of the support 020.

Moreover, an embodiment comprises, after inspecting and/or maintaining the heat exchanger, dismantling the support 020, detaching the first clamp 010a from the first heat exchanger tube 410 and detaching the second clamp 010b from the second heat exchanger tube 420.

In an embodiment, the primary first fastener 122a of the first clamp 010a is fastened in such a way that a compressive force FC between the first clamp 010a and the first heat exchanger tube 410 is at least 5 kN (see Fig. 4g for the compressive force FC). The compressive force FC is preferably 5 kN - 50 kN, such as 5 kN - 20 kN. Preferably, the compressive force FC is distributed over such surfaces of the clamp 010 that are in contact with the tube 410; as evenly as possible. Measures of the clamp 010 to this end have been discussed above. Sufficiently high compressive force FC ensures sufficient friction to keep the clamp 010 in its place in use. Sufficiently low and sufficiently well distributed compressive force FC ensures that the clamp does not damage the tube 410 particularly, when the force FC is distributed on sufficiently large area. A coefficient of friction of the clamp 010 and the tube 410 may be e.g. around 0.2. This applies at least with typical heat exchanger material and when the clamps are made from steel, and the concave parts have not been coated (see above). Thus, a contact force of 5 kN could, at least in theory, support a vertical load of 1 kN, i.e. about 100 kg. Safety margins are applicable. Correspondingly, a pair of clamps 010a, 010b such tightened, could theoretically support a load of 2 kN, i.e. about 200 kg. Clearly, preferably also the primary first fastener 122b of the second clamp 010b is fastened in such a way that a compressive force FC between the second clamp 010b and the second heat exchanger tube 420 is at least 5 kN, e.g. 5 kN - 50 kN, such as 5 kN - 20 kN.

The proper compressive force is obtainable e.g. by tightening a bolt of the primary first fastener 122a, 122b of the clamp 010a, 010b to a specified tightness. The relation between the torque required for the specified tightness and the compressive force FC depends on details of the bolt including a type of the thread of the bolt. However, in a typical case, the compressive force FC equals the sum of the fixing forces FF1 and FF2. Also typically, a torque of 9 Nm results in a first fixing force FF1 of 2.5 kN, and when applied also to the primary second fastener 132, to a compressive force of 5 kN. Thus, the torque by which the bolt is tightened may be e.g. 9 Nm -90 Nm, such as 9 Nm - 35 Nm. The applicable tightening torque may pose limits to the bolt/nut used. Preferably, an M16 bolt/nut is used as the primary and secondary first fasteners 122, 222. Preferably, an M16 bolt/nut is used as the primary and secondary second fasteners 132, 232. However, alternatively smaller or a larger bolt/nut, such as M10 - M21, can be used.

Referring to Figs. 4g, 7a, and 7b, the compressive force FC is a result of a first fixing force FF1 imposed by the primary first fastener 122 to the primary first flat portion 120 and a second fixing force FF2 imposed by the primary second fastener 132 to the primary second flat portion 120. However, for distributing the compressive force evenly, the first and second fixing forces FF1 and FF2 should be more or less equal. This is much more easily achieved when both the primary first fastener 122 and the primary second fastener 132 comprise a bolt or a nut (preferably a bolt), than for example, if the primary second flat portion 130 is provided with a hinge 135 (see Figs. 7a and 7b).

More specifically, in an embodiment, the primary first fastener 122a of the first clamp 010a is fastened such that a ratio (FF1/FF2) of (i) a first fixing force FF1 of the primary first fastener 122 of the first clamp 010a to (ii) a second fixing force FF2 of the primary second fastener 132 of the first clamp (010a) is 1/3 - 3; preferably from 0.75 - 1.3. When both the primary first fastener 122a of the first clamp 010a and the primary second fastener 132a of the first clamp 010a are tightenable, preferably both the primary first fastener 122a of the first clamp 010a and the primary second fastener 132a of the first clamp 010a is fastened such the ratio FF1/FF2 has the value as discussed above. What has been said about the fixing forces of the first clamp 010a applies *mutatis mutandis* to the second clamp 010b.

The heat exchanger may be inspected and/or maintained from a plank or a board 500 as detailed above in connection with the platform 030. The first clamp of the second support 020b of the platform 030 may be attached to a third heat transfer tube 430 by fastening the primary first fastener of the first clamp of the second support 020b; and the second clamp of the second support 020b of the platform 030 may be attached to a fourth heat transfer tube 440 by fastening the primary first fastener of the second clamp of the second support 020b. Reference is made to Fig. 5b.

Thus, the method further comprises fastening the tertiary first fastener of the supportive bar of the second support 020b to the attachment of the first clamp of the second support 020b, and fastening the tertiary second fastener of the supportive bar of the second support 020b to the attachment of the second clamp of the second support 020b. In this way, the second support 020b is mantled.

Thereafter, a plank or a board 500 can be arranged on the first support 020a and the second support 020b. Moreover, the method comprises inspecting and/or maintaining the heat exchanger while being supported by the board or the plank, e.g. while standing on the plank or the board 500.

As detailed above, such a support 020 or a platform 030 is particularly usable when inspecting and/or maintaining a superheater 610 of a boiler 600 (see Fig. 6). This is even more so, when the heat exchanger is a superheater 610 of a chemical recovery boiler 600 (see Fig. 6) or a bubbling fluidized bed boiler 600. Thus, in an embodiment of the method, the heat exchanger 610, 612, which comprises the first heat exchanger tube 410, is a superheater of a boiler 600, such as a superheater 610, 612 of a chemical recovery boiler 600. In an embodiment of the method, the heat exchanger 610, 612, which comprises the first heat exchanger tube 410, is a superheater of a bubbling fluidized bed boiler 600.

## Claims

1. A support (020) for a platform (030) for inspecting and/or maintaining a heat exchanger, the support (020) comprising a first clamp (010, 010a) connectable to a cylindrical tube (410), the first clamp (010, 010a) comprising
- a primary part (100) comprising
∘ a primary semi-tubular portion (110) extending in a primary longitudinal direction (DL1),
∘ a primary first flat portion (120) along a first side of the primary semi-tubular portion (110),
∘ a primary second flat portion (130) along a second side of the primary semi-tubular portion (110), the second side being opposite to the first side,
∘ a primary first fastener (122) arranged on the primary first flat portion (120) and configured to fasten the primary first flat portion (120) to a secondary first flat portion (220) of the clamp (010), the primary first fastener (122) being openable,
∘ a primary second fastener (132) arranged on the primary second flat portion (130) and fastening or configured to fasten the primary second flat portion (130) to a secondary second flat portion (230) of the clamp (010),
∘ an attachment (140) arranged on a convex side (112) of the primary semi-tubular portion (110), wherein
∘ a length (L1) of the primary semi-tubular portion (110) in the primary longitudinal direction (DL1) is at least 5 cm,
∘ a distance (D14) between a centre of the primary first fastener (122) and the attachment (140) in the primary longitudinal direction (DL1) is at least 4 cm,
∘ the attachment (140) protrudes from the convex side (112) of the primary semi-tubular portion (110) at least 25 mm, and
∘ a cross section of the primary semi-tubular portion (110) defines a primary circular arc (A1) of a circle having a radius (R); and
- a secondary part (200) comprising
∘ a secondary semi-tubular portion (210) extending in a secondary longitudinal direction (DL2),
∘ a secondary first flat portion (220) along a first side of the secondary semi-tubular portion (210),
∘ a secondary second flat portion (230) along a second side of the secondary semi-tubular portion (210), the second side being opposite to the first side, and
∘ a secondary first fastener (222) arranged on the secondary first flat portion (220) and configured to function with the primary first fastener (122), wherein
∘ a length (L2) of the secondary semi-tubular portion (210) in the secondary longitudinal direction (DL2) is at least 4 cm, and
∘ a cross section of the secondary semi-tubular portion (210) defines a secondary circular arc (A2) of a circle having the radius (R); wherein
- the primary first fastener (122) is connectable to the secondary first fastener (222) and detachable therefrom such that the first clamp (010, 010a) is connectable to the cylindrical tube (410) from a side of the cylindrical tube (410) and
- in use, the primary longitudinal direction (DL1) is configured to be parallel to the secondary longitudinal direction (DL2); the support (020) further comprising
- a second clamp (010b) and
- a supportive bar (300), the supportive bar (300) comprising
- a tertiary first part (310) having
∘ a tubular shape extending in a tertiary longitudinal direction (DL3),
∘ a tertiary first primary end (312) provided with a tertiary first fastener (313) configured to be fastened to the attachment (140a) of the first clamp (010a), and
∘ an opposite tertiary first secondary end (314), and
- a tertiary second part (320) having
∘ a tubular shape extending in a longitudinal direction,
∘ a tertiary second primary end (322) provided with a tertiary second fastener (323) configured to be fastened to an attachment (140b) of the second clamp (010b), and
∘ an opposite tertiary second secondary end (324), wherein
- the tertiary second secondary end (324) of the tertiary second part (320) is arranged to be fitted inside the tertiary first secondary end (314) of the tertiary first part (310), whereby
- the tertiary first part (310) is slidably connectable to the tertiary second part (320) so as to lengthen and shorten the supportive bar (300), and
- in use, the tubular shape of the tertiary second part (320) extends in the tertiary longitudinal direction (DL3).

2. The support (020) of claim 1, wherein the primary first fastener (122) and the secondary first fastener (222) in combination comprise a first nut and a first bolt, wherein
- the primary first flat portion (120) is attachable to the secondary first flat portion (220) by screwing the first bolt to the first nut, and
- the primary first flat portion (120) is detachable from the secondary first flat portion (220) by unscrewing the first bolt or the first nut.

3. The support (020) of claim 2, wherein
- the first nut has been fixed, e.g. welded, to the primary first flat portion (120) or the secondary first flat portion (220) and
- the first bolt is connected to the secondary first flat portion (220) or the primary first flat portion (120), respectively, such that the first bolt is not detachable from the secondary first flat portion (220) or the primary first flat portion (120), respectively, by unscrewing;
preferably,
- the first nut has been welded to the secondary first flat portion 220 and
- the first bolt is connected to the primary first flat portion 120.

4. The support (020) of any of the claims 1 to 3, wherein
- the secondary part (200) comprises a secondary second fastener (232) arranged on the secondary second flat portion (230) and configured to function with the primary second fastener (132),
- the primary second fastener (132) and the secondary second fastener (232) in combination comprise a second nut and a second bolt, wherein
- the primary second flat portion (130) is attachable to the secondary second flat portion (230) by screwing the second bolt to the second nut, and
- the primary second flat portion (130) is detachable from to the secondary second flat portion (230) by unscrewing the second bolt or the second nut;
the clamp (010) comprising
- a connector (190) connecting the primary part (100) to the secondary part (200).

5. The support (020) of claim 4, wherein
- the second nut has been fixed, e.g. welded, to the primary second flat portion (130) or the secondary second flat portion (230), and
- the second bolt is connected to the secondary second flat portion (230) or the primary second flat portion (130), respectively, such that the second bolt is not detachable from the secondary second flat portion (230) or the primary second flat portion (130), respectively, by unscrewing;
preferably,
- the second nut has been welded to the secondary second flat portion (230) and
- the second bolt is connected to the primary second flat portion (130).

6. The support (020) of any of the claims 1 to 5, wherein
- the primary circular arc (A1) extends an angle (α1) of at least 90 degrees and less than 180 degrees as seen from a centre of the circle forming the primary circular arc (A1),
- the secondary circular arc (A2) extends an angle (α2) of at least 90 degrees and less than 180 degrees as seen from a centre of the circle forming the secondary circular arc (A2);
preferably,
- the radius (R) is from 15 mm to 40 mm and/or
- a sum (α1 + α2) of the angles of extension of the primary and secondary circular arcs (α1, α2) is from 270 degrees to 330 degrees.

7. The support (020) of any of the claims 1 to 6, wherein
- the primary part (100) is further defined by:
∘ a primary first distance (D11) between a first transversal end (TE11) of the primary first flat portion (120) and a centre of the primary first fastener (122) in the primary longitudinal direction (DL1) is at least 2 cm, and
∘ a primary second distance (D12) between a second transversal end (TE12) of the primary first flat portion (120) and a centre of the primary first fastener (122) in the primary longitudinal direction (DL1) is at least 2 cm, and
∘ a primary third distance (D13) between a centre of the primary first fastener (122) and the primary semi-tubular portion (110) is at least 5 mm; and
- the secondary part (200) is further defined by:
∘ a secondary first distance (D21) between a first transversal end (TE21) of the secondary first flat portion (220) and a centre of the secondary first fastener (222) in the secondary longitudinal direction (DL2) is at least 2 cm,
∘ a secondary second distance (D22) between a second transversal end (TE22) of the secondary first flat portion (220) and a centre of the secondary first fastener (222) in the secondary longitudinal direction (DL2) is at least 2 cm, and
∘ a secondary third distance (D23) between a centre of the secondary first fastener (222) and the secondary semi-tubular portion (210) is at least 5 mm.

8. The support (020) of any of the claims 1 to 7, wherein
- the primary semi-tubular portion (110) is made from steel having a yield strength of at least 300 MPa at 20 °C,
- a primary thickness (T1) of the primary semi-tubular portion (110) is from 4 mm to 16 mm,
- the secondary semi-tubular portion (210) is made from steel having a yield strength of at least 300 MPa at 20 °C,
- a secondary thickness (T2) of the secondary semi-tubular portion (210) is from 4 mm to 16 mm;
preferably
- a concave side (114) of the primary semi-tubular portion (110) is free from a coating (e.g. paint), and
- a concave side (214) of the secondary semi-tubular portion (210) is free from a coating (e.g. paint).

9. The support (020) of any of the claims 1 to 8, wherein
[A]
- a distance (D16) between the first transversal end (TE11) of the primary first flat portion (120) and the second transversal end (TE21) of the primary first flat portion (120) is from 10 % to 90 % of the length (L1) of the primary semi-tubular portion (110), and/or
[B]
- a width (W11) of the primary first flat portion (120) is from 15 mm to 40 mm,
- a width (W12) of the primary second flat portion (130) is from 15 mm to 40 mm,
- a width (W21) of the secondary first flat portion (220) is from 15 mm to 40 mm, and
- a width (W22) of the secondary second flat portion (230) is from 15 mm to 40 mm.

10. The support (020) of any of the claims 1 to 9, wherein the second clamp (010b) is connectable to a cylindrical tube, the second clamp (010b) comprising
- a primary part of the second clamp (010b), comprising
∘ a primary semi-tubular portion extending in a primary longitudinal direction of the second clamp (010b),
∘ a primary first flat portion along a first side of the primary semi-tubular portion,
∘ a primary second flat portion along a second side of the primary semi-tubular portion, the second side being opposite to the first side,
∘ a primary first fastener arranged on the primary first flat portion and configured to fasten the primary first flat portion to a secondary first flat portion of the second clamp (010b), the primary first fastener being openable,
∘ a primary second fastener arranged on the primary second flat portion and fastening or configured to fasten the primary second flat portion to a secondary second flat portion of the second clamp (010b),
∘ an attachment arranged on a convex side of the primary semi-tubular portion, wherein
∘ a length of the primary semi-tubular portion in the primary longitudinal direction of the second clamp (010b) is at least 5 cm,
∘ a distance between a centre of the primary first fastener and the attachment in the primary longitudinal direction of the second clamp (010b) is at least 4 cm,
∘ the attachment protrudes from the convex side of the primary semi-tubular portion at least 25 mm, and
∘ a cross section of the primary semi-tubular portion defines a primary circular arc of a circle having a radius; and
- a secondary part of the second clamp (010b), comprising
∘ a secondary semi-tubular portion extending in a secondary longitudinal direction of the second clamp (010b),
∘ a secondary first flat portion along a first side of the secondary semi-tubular portion,
∘ a secondary second flat portion along a second side of the secondary semi-tubular portion, the second side being opposite to the first side, and
∘ a secondary first fastener arranged on the secondary first flat portion and configured to function with the primary first fastener, wherein
∘ a length of the secondary semi-tubular portion in the secondary longitudinal direction of the second clamp (010b) is at least 4 cm, and
∘ a cross section of the secondary semi-tubular portion defines a secondary circular arc of a circle having the radius; wherein
- the primary first fastener of the primary part of the second clamp (010b) is connectable to the secondary first fastener of secondary part of the second clamp (010b) and detachable therefrom such that the second clamp (010b) is connectable to a cylindrical tube from a side of the cylindrical tube and
- in use, the primary longitudinal direction of the second clamp (010b) is configured to be parallel to the secondary longitudinal direction of the second clamp (010b);
preferably,
- the first clamp (010a) and the second clamp (010b) are identical.

11. The support (020) of any of the claims 1 to 10, wherein
- the tertiary second secondary end (324) of tertiary second part (320) is provided with an aperture (325) and
- the tertiary first secondary end (314) of tertiary first part (320) is provided with a fixing member (315) configured to extend through the aperture (325), whereby
- the tertiary first part (310) is not detachable from the tertiary second part (320) without opening the fixing member (315).

12. A platform (030) for inspecting and/or maintaining a heat exchanger (600, 612), the platform (030) comprising
- a first support (020a) according to any of the claims 1 to 11,
- a second support (020b) according to any of the claims 1 to 11, and
- a plank or a board (500) arranged on the first support (020a) and the second support (020b), wherein
- a distance (D020) between the first support (020a) and the second support (020b) is from 60 cm to 3 m, and
- the plank or the board (500) is substantially horizontal;
preferably
- the first support (020a) and the second support (020b) are identical.

13. A method for inspecting and/or maintaining a heat exchanger (610, 612) comprising a first exchanger tube (410), the heat exchanger or another heat exchanger comprising a second heat exchanger tube (420); wherein
- a longitudinal direction of the first heat exchanger tube (410) is vertical or forms an angle of at most 30 degrees with a vertical direction, and
- a longitudinal direction of the second heat exchanger tube (420) is vertical or forms an angle of at most 30 degrees with a vertical direction,
the method comprising
- arranging available a first support (020, 020a) according to any of the claims 1 to 11,
- ensuring that the primary first fastener (122a) of the first clamp (010a) is open,
- arranging the first heat exchanger tube (410) in connection with a concave part of the primary semi-tubular portion of the first clamp (010a) and in connection with a concave part of the secondary semi-tubular portion of the first clamp (010a),
- fastening the first clamp (010a) to the first heat exchanger tube (410) by fastening the primary first fastener (122a) of the first clamp (010a),
- ensuring that the primary first fastener (122b) of the second clamp (010b) is open,
- arranging the second heat exchanger tube (420) in connection with a concave part of the primary semi-tubular portion of the second clamp (010b) and in connection with a concave part of the secondary semi-tubular portion of the second clamp (010b) and
- fastening the second clamp (010b) to the second heat exchanger tube (420) by fastening the primary first fastener (122b) of the second clamp (010b),
- fastening the tertiary first fastener (313) of the supportive bar (300) to the attachment (140a) of the first clamp (010a),
- fastening the tertiary second fastener (323) of the supportive bar (300) to the attachment (140b) of the second clamp (010b), and
- inspecting and/or maintaining the heat exchanger (600, 612) using the support (020).

14. The method of claim 13, wherein
- the primary first fastener (122a) of the first clamp (010a) is fastened in such a way that a compressive force (FC) between the first clamp (010a) and the first heat exchanger tube (410) is at least 5 kN, such as from 5 kN to 100 kN, preferably from 5 kN to 20 kN;
preferably also
- the primary first fastener (122b) of the second clamp (010b) is fastened in such a way that a compressive force (FC) between the second clamp (010b) and the second heat exchanger tube (420) is at least 5 kN, such as from 5 kN to 100 kN, preferably from 5 kN to 20 kN.

15. The method of claim 13 or 14, wherein
- the primary first fastener (122a) of the first clamp (010a) is fastened such that a ratio of (i) a first fixing force (FF1) of the primary first fastener (122) of the first clamp (010a) to (ii) a second fixing force (FF2) of the primary second fastener (132) of the first clamp (010a) is from 1/3 to 3; preferably from 0.75 to 1.3.

16. The method of any of the claims 13 to 15, comprising
- after inspecting and/or maintaining the heat exchanger (600, 612), detaching the supportive bar (300) from the first and second clamps (010a, 010b), detaching the first clamp (010a) from the first heat exchanger tube (410), and detaching the second clamp (010b) from the second heat exchanger tube (420).

17. The method of any of the claims 13 to 16, comprising
- arranging available a second support (020b) according to any of the claims 1 to 11,
- fastening the first clamp of the second support (020b) to a third heat exchanger tube (430) by fastening the primary first fastener of the first clamp of the second support (020b),
- fastening the second clamp of the second support (020b) to a fourth heat exchanger tube (440) by fastening the primary first fastener of the second clamp of the second support (020b),
- fastening the tertiary first fastener of the supportive bar of the second support (020b) to the attachment of the first clamp of the second support (020b),
- fastening the tertiary second fastener of the supportive bar of the second support (020b) to the attachment of the second clamp of the second support (020b),
- arranging a plank or a board (500) on the supportive bar (300) of the support (020, 020a) and on the supportive bar of the second support (020b), and
- inspecting and/or maintaining the heat exchanger (610, 612) while being supported by the plank or the board (500).

18. The method of any of the claims 13 to 17, wherein
- the heat exchanger (610, 612) is a superheater of a boiler (600), such as a superheater (610, 612) of a chemical recovery boiler (600) or a superheater (610, 612) bubbling fluidized bed boiler (600).

## Patentansprüche

1. Träger (020) für eine Plattform (030) zur Inspektion und/oder Wartung eines Wärmetauschers, wobei der Träger (020) eine erste Klemmvorrichtung (010, 010a) umfasst, die mit einem zylindrischen Rohr (410) verbindbar ist, wobei die erste Klemmvorrichtung (010, 010a) Folgendes umfasst:
- einen primären Teil (100), umfassend
∘ einen primären halbrohrförmigen Abschnitt (110), der sich in einer primären Längsrichtung (DL1) erstreckt,
∘ einen primären ersten flachen Abschnitt (120) entlang einer ersten Seite des primären halbrohrförmigen Abschnitts (110),
∘ einen primären zweiten flachen Abschnitt (130) entlang einer zweiten Seite des primären halbrohrförmigen Abschnitts (110), wobei die zweite Seite der ersten Seite gegenüberliegt,
∘ ein primäres erstes Befestigungsmittel (122), das auf dem primären ersten flachen Abschnitt (120) angeordnet und dafür konfiguriert ist, den primären ersten flachen Abschnitt (120) an einem sekundären ersten flachen Abschnitt (220) der Klemmvorrichtung (010) zu befestigen, wobei das primäre erste Befestigungsmittel (122) öffenbar ist,
∘ ein primäres zweites Befestigungsmittel (132), das auf dem primären zweiten flachen Abschnitt (130) angeordnet ist und den primären zweiten flachen Abschnitt (130) an einem sekundären zweiten flachen Abschnitt (230) der Klemmvorrichtung (010) befestigt oder dafür konfiguriert ist, diesen zu befestigen,
∘ ein auf einer konvexen Seite (112) des primären halbrohrförmigen Abschnitts (110) angeordnetes Anbauteil (140), wobei
∘ eine Länge (L1) des primären halbrohrförmigen Abschnitts (110) in der primären Längsrichtung (DL1) mindestens 5 cm beträgt,
∘ ein Abstand (D14) zwischen einer Mitte des primären ersten Befestigungsmittels (122) und dem Anbauteil (140) in der primären Längsrichtung (DL1) mindestens 4 cm beträgt,
∘ das Anbauteil (140) von der konvexen Seite (112) des primären halbrohrförmigen Abschnitts (110) um mindestens 25 mm hinausragt und
∘ ein Querschnitt des primären halbrohrförmigen Abschnitts (110) einen primären Kreisbogen (A1) eines Kreises mit einem Radius (R) definiert; und
- einen sekundären Teil (200), umfassend
∘ einen sekundären halbrohrförmigen Abschnitt (210), der sich in einer sekundären Längsrichtung (DL2) erstreckt,
∘ einen sekundären ersten flachen Abschnitt (220) entlang einer ersten Seite des sekundären halbrohrförmigen Abschnitts (210),
∘ einen sekundären zweiten flachen Abschnitt (230) entlang einer zweiten Seite des sekundären halbrohrförmigen Abschnitts (210), wobei die zweite Seite der ersten Seite gegenüberliegt, und
∘ ein sekundäres erstes Befestigungsmittel (222), das auf dem sekundären ersten flachen Abschnitt (220) angeordnet und dafür konfiguriert ist, mit dem primären ersten Befestigungsmittel (122) zu funktionieren, wobei
∘ eine Länge (L2) des sekundären halbrohrförmigen Abschnitts (210) in der sekundären Längsrichtung (DL2) mindestens 4 cm beträgt und
∘ ein Querschnitt des sekundären halbrohrförmigen Abschnitts (210) einen sekundären Kreisbogen (A2) eines Kreises mit dem Radius (R) definiert, wobei
- das primäre erste Befestigungsmittel (122) mit dem sekundären ersten Befestigungsmittel (222) verbindbar und von diesem so ablösbar ist, dass die erste Klemmvorrichtung (010, 010a) von einer Seite des zylindrischen Rohrs (410) aus mit dem zylindrischen Rohr (410) verbindbar ist, und
- bei Verwendung die primäre Längsrichtung (DL1) dafür konfiguriert ist, parallel zu der sekundären Längsrichtung (DL2) zu verlaufen, wobei der Träger (020) ferner Folgendes umfasst:
- eine zweite Klemmvorrichtung (010b) und
- eine tragende Stange (300), wobei die tragende Stange (300) Folgendes umfasst:
- einen tertiären ersten Teil (310) mit
∘ einer Rohrform, die sich in einer tertiären Längsrichtung (DL3) erstreckt,
∘ einem tertiären ersten primären Ende (312), das mit einem tertiären ersten Befestigungsmittel (313) versehen ist, das dafür konfiguriert ist, an dem Anbauteil (140a) der ersten Klemmvorrichtung (010a) befestigt zu werden, und
∘ einem gegenüberliegenden tertiären ersten sekundären Ende (314), und
- einen tertiären zweiten Teil (320) mit
∘ einer Rohrform, die sich in einer Längsrichtung erstreckt,
∘ einem tertiären zweiten primären Ende (322), das mit einem tertiären zweiten Befestigungsmittel (323) versehen ist, das dafür konfiguriert ist, an einem Anbauteil (140b) der zweiten Klemmvorrichtung (010b) befestigt zu werden, und
∘ einem gegenüberliegenden tertiären zweiten sekundären Ende (324), wobei
- das tertiäre zweite sekundäre Ende (324) des tertiären zweiten Teils (320) so angeordnet ist, dass es in das tertiäre erste sekundäre Ende (314) des tertiären ersten Teils (310) eingepasst ist, wodurch
- der tertiäre erste Teil (310) gleitend mit dem tertiären zweiten Teil (320) verbindbar ist, um die tragende Stange (300) zu verlängern und zu verkürzen, und
- sich bei Verwendung die Rohrform des tertiären zweiten Teils (320) in die tertiäre Längsrichtung (DL3) erstreckt.

2. Träger (020) nach Anspruch 1, wobei das primäre erste Befestigungsmittel (122) und das sekundäre erste Befestigungsmittel (222) in Kombination eine erste Schraubenmutter und eine erste Schraube umfassen, wobei
- der primäre erste flache Abschnitt (120) an dem sekundären ersten flachen Abschnitt (220) durch Schrauben der ersten Schraube auf die erste Schraubenmutter anbringbar ist, und
- der primäre erste flache Abschnitt (120) von dem sekundären ersten flachen Abschnitt (220) durch Aufschrauben der ersten Schraube oder der ersten Schraubenmutter ablösbar ist.

3. Träger (020) nach Anspruch 2, wobei
- die erste Schraubenmutter an dem primären ersten flachen Abschnitt (120) oder dem sekundären ersten flachen Abschnitt (220) befestigt, z. B. geschweißt, worden ist, und
- die erste Schraube mit dem sekundären ersten flachen Abschnitt (220) bzw. dem primären ersten flachen Abschnitt (120) so verbunden ist, dass die erste Schraube nicht durch Aufschrauben von dem sekundären ersten flachen Abschnitt (220) bzw. dem primären ersten flachen Abschnitt (120) ablösbar ist;
vorzugsweise
- die erste Schraubenmutter an den sekundären ersten flachen Abschnitt (220) geschweißt worden ist und
- die erste Schraube mit dem primären ersten flachen Abschnitt (120) verbunden ist.

4. Träger (020) nach einem der Ansprüche 1 bis 3, wobei
- der sekundäre Teil (200) ein sekundäres zweites Befestigungsmittel (232) umfasst, das auf dem sekundären zweiten flachen Abschnitt (230) angeordnet und dafür konfiguriert ist, mit dem primären zweiten Befestigungsmittel (132) zu funktionieren,
- das primäre zweite Befestigungsmittel (132) und das sekundäre zweite Befestigungsmittel (232) in Kombination eine zweite Schraubenmutter und eine zweite Schraube umfassen, wobei
- der primäre zweite flache Abschnitt (130) an dem sekundären zweiten flachen Abschnitt (230) durch Schrauben der zweiten Schraube auf die zweite Schraubenmutter anbringbar ist, und
- der primäre zweite flache Abschnitt (130) von dem sekundären zweiten flachen Abschnitt (230) durch Aufschrauben der zweiten Schraube oder der zweiten Schraubenmutter ablösbar ist;
wobei die Klemmvorrichtung (010) Folgendes umfasst:
- ein Verbindungsstück (190), das den primären Teil (100) mit dem sekundären Teil (200) verbindet.

5. Träger (020) nach Anspruch 4, wobei
- die zweite Schraubenmutter an dem primären zweiten flachen Abschnitt (130) oder dem sekundären zweiten flachen Abschnitt (230) befestigt, z. B. geschweißt, worden ist, und
- die zweite Schraube mit dem sekundären zweiten flachen Abschnitt (230) bzw. dem primären zweiten flachen Abschnitt (130) so verbunden ist, dass die zweite Schraube nicht durch Aufschrauben von dem sekundären zweiten flachen Abschnitt (230) bzw. dem primären zweiten flachen Abschnitt (130) ablösbar ist,
vorzugsweise
- die zweite Schraubenmutter an den sekundären zweiten flachen Abschnitt (230) geschweißt worden ist, und
- die zweite Schraube mit dem primären zweiten flachen Abschnitt (130) verbunden ist.

6. Träger (020) nach einem der Ansprüche 1 bis 5, wobei
- sich der primäre Kreisbogen (A1) über einen Winkel (α1) von mindestens 90 Grad und weniger als 180 Grad, gesehen von einer Mitte des den primären Kreisbogen (A1) bildenden Kreises aus gesehen, erstreckt;
- sich der sekundäre Kreisbogen (A2) über einen Winkel (α2) von mindestens 90 Grad und weniger als 180 Grad, gesehen von einer Mitte des den sekundären Kreisbogen (A2) bildenden Kreises aus gesehen, erstreckt;
vorzugsweise
- der Radius (R) 15 mm bis 40 mm beträgt und/oder
- eine Summe (α1 + α2) der Erstreckungswinkel des primären und des sekundären Kreisbogens (α1, α2) von 270 Grad bis 330 Grad beträgt.

7. Träger (020) nach einem der Ansprüche 1 bis 6, wobei
- der primäre Teil (100) ferner dadurch definiert ist, dass
o ein primärer erster Abstand (D11) zwischen einem ersten transversalen Ende (TE11) des primären ersten flachen Abschnitts (120) und einer Mitte des primären ersten Befestigungsmittels (122) in der primären Längsrichtung (DL1) mindestens 2 cm beträgt und
∘ ein primärer zweiter Abstand (D12) zwischen einem zweiten transversalen Ende (TE12) des primären ersten flachen Abschnitts (120) und einer Mitte des primären ersten Befestigungsmittels (122) in der primären Längsrichtung (DL1) mindestens 2 cm beträgt und
∘ ein primärer dritter Abstand (D13) zwischen einer Mitte des primären ersten Befestigungsmittels (122) und dem primären halbrohrförmigen Abschnitt (110) mindestens 5 mm beträgt und
- der sekundäre Teil (200) ferner dadurch definiert ist, dass:
∘ ein sekundärer erster Abstand (D21) zwischen einem ersten transversalen Ende (TE21) des sekundären ersten flachen Abschnitts (220) und einer Mitte des sekundären ersten Befestigungsmittels (222) in der sekundären Längsrichtung (DL2) mindestens 2 cm beträgt,
∘ ein sekundärer zweiter Abstand (D22) zwischen einem zweiten transversalen Ende (TE22) des sekundären ersten flachen Abschnitts (220) und einer Mitte des sekundären ersten Befestigungsmittels (222) in der sekundären Längsrichtung (DL2) mindestens 2 cm beträgt und
∘ ein sekundärer dritter Abstand (D23) zwischen einer Mitte des sekundären ersten Befestigungsmittels (222) und dem sekundären halbrohrförmigen Abschnitt (210) mindestens 5 mm beträgt.

8. Träger (020) nach einem der Ansprüche 1 bis 7, wobei
- der primäre halbrohrförmige Abschnitt (110) aus Stahl mit einer Streckgrenze von mindestens 300 MPa bei 20 °C besteht;
- eine primäre Dicke (T1) des primären halbrohrförmigen Teils (110) 4 mm bis 16 mm beträgt;
- der sekundäre halbrohrförmige Abschnitt (210) aus Stahl mit einer Streckgrenze von mindestens 300 MPa bei 20 °C besteht;
- eine sekundäre Dicke (T2) des sekundären halbrohrförmigen Abschnitts (210) 4 mm bis 16 mm beträgt;
vorzugsweise
- eine konkave Seite (114) des primären halbrohrförmigen Abschnitts (110) frei von einer Beschichtung (z. B. Farbe) ist und
- eine konkave Seite (214) des sekundären halbrohrförmigen Teils (210) frei von einer Beschichtung (z. B. Farbe) ist.

9. Träger (020) nach einem der Ansprüche 1 bis 8, wobei
[A]
- ein Abstand (D16) zwischen dem ersten transversalen Ende (TE11) des primären ersten flachen Abschnitts (120) und dem zweiten transversalen Ende (TE21) des primären ersten flachen Abschnitts (120) 10 % bis 90 % der Länge (L1) des primären halbrohrförmigen Abschnitts (110) beträgt und/oder
[B]
- eine Breite (W11) des primären ersten flachen Abschnitts (120) 15 mm bis 40 mm beträgt,
- eine Breite (W12) des primären zweiten flachen Abschnitts (130) 15 mm bis 40 mm beträgt,
- eine Breite (W21) des sekundären ersten flachen Abschnitts (220) 15 mm bis 40 mm beträgt und
- eine Breite (W22) des sekundären zweiten flachen Abschnitts (230) 15 mm bis 40 mm beträgt.

10. Träger (020) nach einem der Ansprüche 1 bis 9, wobei die zweite Klemmvorrichtung (010b) mit einem zylindrischen Rohr verbindbar ist, wobei die zweite Klemmvorrichtung (010b) Folgendes umfasst:
- einen primären Teil der zweiten Klemmvorrichtung (010b), umfassend
∘ einen primären halbrohrförmigen Abschnitt, der sich in einer primären Längsrichtung der zweiten Klemmvorrichtung (010b) erstreckt,
∘ einen primären ersten flachen Abschnitt entlang einer ersten Seite des primären halbrohrförmigen Abschnitts,
∘ einen primären zweiten flachen Abschnitt entlang einer zweiten Seite des primären halbrohrförmigen Abschnitts, wobei die zweite Seite der ersten Seite gegenüberliegt,
∘ ein primäres erstes Befestigungsmittel, das auf dem primären ersten flachen Abschnitt angeordnet und dafür konfiguriert ist, den primären ersten flachen Abschnitt an einem sekundären ersten flachen Abschnitt der Klemmvorrichtung (010b) zu befestigen, wobei das primäre erste Befestigungsmittel öffenbar ist,
∘ ein primäres zweites Befestigungsmittel, das auf dem primären zweiten flachen Abschnitt angeordnet ist und den primären zweiten flachen Abschnitt an einem sekundären zweiten flachen Abschnitt der zweiten Klemmvorrichtung (010b) befestigt oder dafür konfiguriert ist, diesen zu befestigen,
∘ ein auf einer konvexen Seite des primären halbrohrförmigen Abschnitts angeordnetes Anbauteil, wobei
∘ eine Länge des primären halbrohrförmigen Abschnitts in der primären Längsrichtung der zweiten Klemmvorrichtung (010b) mindestens 5 cm beträgt,
∘ ein Abstand zwischen einer Mitte des primären ersten Befestigungsmittels und dem Anbauteil in der primären Längsrichtung der zweiten Klemmvorrichtung (010b) mindestens 4 cm beträgt,
o o das Anbauteil von der konvexen Seite des primären halbrohrförmigen Abschnitts um mindestens 25 mm hinausragt, und
o o ein Querschnitt des primären halbrohrförmigen Abschnitts einen primären Kreisbogen eines Kreises mit einem Radius definiert; und
- einen sekundären Teil der zweiten Klemmvorrichtung (010b), umfassend
∘ einen sekundären halbrohrförmigen Abschnitt, der sich in einer sekundären Längsrichtung der zweiten Klemmvorrichtung (010b) erstreckt,
∘ einen sekundären ersten flachen Abschnitt entlang einer ersten Seite des sekundären halbrohrförmigen Abschnitts,
∘ einen sekundären zweiten flachen Abschnitt entlang einer zweiten Seite des sekundären halbrohrförmigen Abschnitts, wobei die zweite Seite der ersten Seite gegenüberliegt, und
∘ ein sekundäres erstes Befestigungsmittel, das auf dem sekundären ersten flachen Abschnitt angeordnet und dafür konfiguriert ist, mit dem primären ersten Befestigungsmittel zu funktionieren, wobei
∘ eine Länge des sekundären halbrohrförmigen Abschnitts in der sekundären Längsrichtung der zweiten Klemmvorrichtung (010b) mindestens 4 cm beträgt, und
∘ ein Querschnitt des sekundären halbrohrförmigen Abschnitts einen sekundären Kreisbogen eines Kreises mit dem Radius definiert, wobei
- das primäre erste Befestigungsmittel des primären Teils der zweiten Klemmvorrichtung (010b) mit dem sekundären ersten Befestigungsmittel des sekundären Teils der zweiten Klemmvorrichtung (010b) verbindbar und von diesem ablösbar ist, so dass die zweite Klemmvorrichtung (010b) mit einem zylindrischen Rohr von einer Seite des zylindrischen Rohrs aus verbindbar ist, und
- bei Verwendung die primäre Längsrichtung der zweiten Klemmvorrichtung (010b) dafür konfiguriert ist, parallel zu der sekundären Längsrichtung der zweiten Klemmvorrichtung (010b) zu verlaufen,
vorzugsweise
- die erste Klemmvorrichtung (010a) und die zweite Klemmvorrichtung (010b) identisch sind.

11. Träger (020) nach einem der Ansprüche 1 bis 10, wobei
- das tertiäre zweite sekundäre Ende (324) des tertiären zweiten Teils (320) mit einer Öffnung (325) versehen ist und
- das tertiäre erste sekundäre Ende (314) des tertiären ersten Teils (320) mit einem Fixierelement (315) versehen ist, das dafür konfiguriert ist, sich durch die Öffnung (325) zu erstrecken, wodurch
- das tertiäre erste Teil (310) nicht von dem tertiären zweiten Teil (320) ablösbar ist, ohne das Fixierelement (315) zu öffnen.

12. Plattform (030) zur Inspektion und/oder Wartung eines Wärmetauschers (600, 612), wobei die Plattform (030) Folgendes umfasst:
- einen ersten Träger (020a) nach einem der Ansprüche 1 bis 11,
- einen zweiten Träger (020b) nach einem der Ansprüche 1 bis 11, und
- eine Planke oder eine Platte (550), die auf dem ersten Träger (020a) und dem zweiten Träger (020b) angeordnet ist, wobei
- ein Abstand (D020) zwischen dem ersten Träger (020a) und dem zweiten Träger (020b) 60 cm bis 3 m beträgt und
- die Planke oder die Platte (500) im Wesentlichen horizontal ist,
vorzugsweise
- der erste Träger (020a) und der zweite Träger (020b) identisch sind.

13. Verfahren zur Inspektion und/oder Wartung eines Wärmetauschers (610, 612), umfassend ein erstes Tauscherrohr (410), wobei der Wärmetauscher oder ein weiterer Wärmetauscher ein zweites Wärmetauscherrohr (420) umfasst, wobei
- eine Längsrichtung des ersten Wärmetauscherrohrs (410) vertikal ist oder einen Winkel von höchstens 30 Grad mit einer vertikalen Richtung bildet, und
- eine Längsrichtung des zweiten Wärmetauscherrohrs (420) vertikal ist oder einen Winkel von höchstens 30 Grad mit einer vertikalen Richtung bildet, wobei das Verfahren Folgendes umfasst:
- Anordnen zur Bereitstellung eines ersten Trägers (020, 020a) nach einem der Ansprüche 1 bis 11,
- Sicherstellen, dass das primäre erste Befestigungsmittel (122a) der ersten Klemmvorrichtung (010a) offen ist,
- Anordnen des ersten Wärmetauscherrohrs (410) in Verbindung mit einem konkaven Teil des primären halbrohrförmigen Abschnitts der ersten Klemmvorrichtung (010a) und in Verbindung mit einem konkaven Teil des sekundären halbrohrförmigen Abschnitts der ersten Klemmvorrichtung (010a),
- Befestigen der ersten Klemmvorrichtung (010a) an dem ersten Wärmetauscherrohr (410) durch Befestigen des primären ersten Befestigungsmittels (122a) der ersten Klemmvorrichtung (010a),
- Sicherstellen, dass das primäre erste Befestigungsmittel (122b) der zweiten Klemmvorrichtung (010b) offen ist,
- Anordnen des zweiten Wärmetauscherrohrs (420) in Verbindung mit einem konkaven Teil des primären halbrohrförmigen Abschnitts der zweiten Klemmvorrichtung (010b) und in Verbindung mit einem konkaven Teil des sekundären halbrohrförmigen Abschnitts der zweiten Klemmvorrichtung (010b) und
- Befestigen der zweiten Klemmvorrichtung (010b) an dem zweiten Wärmetauscherrohr (420) durch Befestigen des primären ersten Befestigungsmittels (122b) der zweiten Klemmvorrichtung (010b),
- Befestigen des tertiären ersten Befestigungsmittels (313) der tragenden Stange (300) an dem Anbauteil (140a) der ersten Klemmvorrichtung (010a),
- Befestigen des tertiären zweiten Befestigungsmittels (323) der tragenden Stange (300) an dem Anbauteil (140b) der zweiten Klemmvorrichtung (010b), und
- Inspizieren und/oder Warten des Wärmetauschers (600, 612) unter Verwendung des Trägers (020).

14. Verfahren nach Anspruch 13, wobei
- das primäre erste Befestigungsmittel (122a) der ersten Klemmvorrichtung (010a) so befestigt ist, dass eine Druckkraft (FC) zwischen der ersten Klemmvorrichtung (010a) und dem ersten Wärmetauscherrohr (410) mindestens 5 kN beträgt, wie von 5 kN bis 100 kN, vorzugsweise von 5 kN bis 20 kN; weiter vorzugsweise
- das primäre erste Befestigungsmittel (122b) der zweiten Klemmvorrichtung (010b) so befestigt ist, dass eine Druckkraft (FC) zwischen der zweiten Klemmvorrichtung (010b) und dem zweiten Wärmetauscherrohr (420) mindestens 5 kN beträgt, wie von 5 kN bis 100 kN, vorzugsweise von 5 kN bis 20 kN.

15. Verfahren nach Anspruch 13 oder 14, wobei
- das primäre erste Befestigungsmittel (122a) der ersten Klemmvorrichtung (010a) so befestigt ist, dass ein Verhältnis von (i) einer ersten Fixierkraft (FF1) des primären ersten Befestigungsmittels (122) der ersten Klemmvorrichtung (010a) zu (ii) einer zweiten Fixierkraft (FF2) des primären zweiten Befestigungsmittels (132) der ersten Klemmvorrichtung (010a) von 1/3 bis 3, vorzugsweise von 0,75 bis 1,3 beträgt.

16. Verfahren nach einem der Ansprüche 13 bis 15, umfassend
- nach dem Inspizieren und/oder Warten des Wärmetauschers (600, 612), Ablösen der tragenden Stange (300) von der ersten und der zweiten Klemmvorrichtung (010a, 010b), Ablösen der ersten Klemmvorrichtung (010a) von dem ersten Wärmetauscherrohr (410) und Ablösen der zweiten Klemmvorrichtung (010b) von dem zweiten Wärmetauscherrohr (420).

17. Verfahren nach einem der Ansprüche 13 bis 16, umfassend
- Anordnen zur Bereitstellung eines zweiten Trägers (020b) nach einem der Ansprüche 1 bis 11,
- Befestigen der ersten Klemmvorrichtung des zweiten Trägers (020b) an einem dritten Wärmetauscherrohr (430) durch Befestigen des primären ersten Befestigungsmittels der ersten Klemmvorrichtung des zweiten Trägers (020b),
- Befestigen der zweiten Klemmvorrichtung des zweiten Trägers (020b) an einem vierten Wärmetauscherrohr (440) durch Befestigen des primären ersten Befestigungsmittels der zweiten Klemmvorrichtung des zweiten Trägers (020b),
- Befestigen des tertiären ersten Befestigungsmittels der tragenden Stange des zweiten Trägers (020b) an dem Anbauteil der ersten Klemmvorrichtung des zweiten Trägers (020b),
- Befestigen des tertiären zweiten Befestigungsmittels der tragenden Stange des zweiten Trägers (020b) an dem Anbauteil der zweiten Klemmvorrichtung des zweiten Trägers (020b),
- Anordnen einer Planke oder einer Platte (500) an der tragenden Stange (300) des Trägers (020, 020a) und an der tragenden Stange des zweiten Trägers (020b), und
- Inspizieren und/oder Warten des Wärmetauschers (610, 612), während er von der Planke oder der Platte (500) getragen wird.

18. Verfahren nach einem der Ansprüche 13 bis 17, wobei
- der Wärmetauscher (610, 612) ein Überhitzer eines Kessels (600) ist, wie ein Überhitzer (610, 612) eines chemischen Rückgewinnungskessels (600) oder ein Überhitzer (610, 612) eines sprudelnden Wirbelschichtkessels (600).

## Revendications

1. Support (020) pour une plate-forme (030) d'inspection et/ou de maintenance d'un échangeur de chaleur, le support (020) comprenant un premier dispositif de serrage (010, 010a) pouvant être raccordé à un tube cylindrique (410), le premier dispositif de serrage (010, 010a) comprenant
- une partie primaire (100) comprenant
∘ une portion semi-tubulaire primaire (110) s'étendant dans un sens longitudinal primaire (DL1),
∘ une première portion plate primaire (120) le long d'un premier côté de la portion semi-tubulaire primaire (110),
∘ une deuxième portion plate primaire (130) le long d'un deuxième côté de la portion semi-tubulaire primaire (110), le deuxième côté étant opposé au premier côté,
∘ un premier élément de fixation primaire (122) agencé sur la première portion plate primaire (120) et configuré pour fixer la première portion plate primaire (120) à une première portion plate secondaire (220) du dispositif de serrage (010), le premier élément de fixation primaire (122) pouvant s'ouvrir,
∘ un deuxième élément de fixation primaire (132) agencé sur la deuxième portion plate primaire (130) et fixant ou étant configuré pour fixer la deuxième portion plate primaire (130) à une deuxième portion plate secondaire (230) du dispositif de serrage (010),
∘ une pièce additionnelle (140) agencée sur un côté convexe (112) de la portion semi-tubulaire primaire (110), dans lequel
∘ une longueur (L1) de la portion semi-tubulaire primaire (110) dans le sens longitudinal primaire (DL1) est de 5 cm au moins,
∘ une distance (D14) entre un centre du premier élément de fixation primaire (122) et la pièce additionnelle (140) dans le sens longitudinal primaire (DL1) est de 4 cm au moins,
∘ la pièce additionnelle (140) fait saillie du côté convexe (112) de la portion semi-tubulaire primaire (110) de 25 mm au moins, et
∘ une section transversale de la portion semi-tubulaire primaire (110) définit un arc de cercle primaire (A1) d'un cercle ayant un rayon (R), et
- une partie secondaire (200) comprenant
∘ une portion semi-tubulaire secondaire (210) s'étendant dans un sens longitudinal secondaire (DL2),
∘ une première portion plate secondaire (220) le long d'un premier côté de la portion semi-tubulaire secondaire (210),
∘ une deuxième portion plate secondaire (230) le long d'un deuxième côté de la portion semi-tubulaire secondaire (210), le deuxième côté étant opposé au premier côté, et
∘ un premier élément de fixation secondaire (222) agencé sur la première portion plate secondaire (220) et configuré pour fonctionner avec le premier élément de fixation primaire (122), dans lequel
∘ une longueur (L2) de la portion semi-tubulaire secondaire (210) dans le sens longitudinal secondaire (DL2) est de 4 cm au moins, et
∘ une section transversale de la portion semi-tubulaire secondaire (210) définit un arc de cercle secondaire (A2) d'un cercle ayant le rayon (R) ; dans lequel
- le premier élément de fixation primaire (122) peut être raccordé au premier élément de fixation secondaire (222) et en être séparé de telle sorte que le premier dispositif de serrage (010, 010a) peut être raccordé au tube cylindrique (410) depuis un côté du tube cylindrique (410) et
- lors de l'utilisation, le sens longitudinal primaire (DL1) est configuré pour être parallèle au sens longitudinal secondaire (DL2) ; le support (020) comprenant, en outre
- un deuxième dispositif de serrage (01 0b) et
- une barre de support (300), la barre de support (300) comprenant
- une première partie tertiaire (310) ayant
∘ une forme tubulaire s'étendant dans un sens longitudinal tertiaire (DL3),
∘ une première extrémité primaire tertiaire (312) dotée d'un premier élément de fixation tertiaire (313) configuré pour être fixé à la pièce additionnelle (140a) du premier dispositif de serrage (010a), et
∘ une première extrémité secondaire tertiaire opposée (314), et
- une deuxième partie tertiaire (320) ayant
∘ une forme tubulaire s'étendant dans un sens longitudinal,
∘ une deuxième extrémité primaire tertiaire (322) dotée d'un deuxième élément de fixation tertiaire (323) configuré pour être fixé à une pièce additionnelle (140b) du deuxième dispositif de serrage (010b), et
∘ une deuxième extrémité secondaire tertiaire opposée (324), dans lequel
- la deuxième extrémité secondaire tertiaire (324) de la deuxième partie tertiaire (320) est agencée pour être insérée à l'intérieur de la première extrémité secondaire tertiaire (314) de la première partie tertiaire (310), de sorte que
- la première partie tertiaire (310) peut être raccordée de façon coulissante à la deuxième partie tertiaire (320) de manière à prolonger et raccourcir la barre de support (300), et
- lors de l'utilisation, la forme tubulaire de la deuxième partie tertiaire (320) s'étend dans le sens longitudinal tertiaire (DL3).

2. Support (020) selon la revendication 1, dans lequel le premier élément de fixation primaire (122) et le premier élément de fixation secondaire (222) comprennent conjointement un premier écrou et un premier boulon, dans lequel
- la première portion plate primaire (120) peut être fixée à la première portion plate secondaire (220) en vissant le premier boulon au premier écrou, et
- la première portion plate primaire (120) peut être séparée de la première portion plate secondaire (220) en dévissant le premier boulon ou le premier écrou.

3. Support (020) selon la revendication 2, dans lequel
- le premier écrou a été fixé, par exemple, soudé, à la première portion plate primaire (120) ou à la première portion plate secondaire (220) et
- le premier boulon est raccordé à la première portion plate secondaire (220) ou à la première portion plate primaire (120), respectivement, de telle sorte que le premier boulon n'est pas séparable de la première portion plate secondaire (220) ou de la première portion plate primaire (120), respectivement, par dévissage ;
de préférence,
- le premier écrou a été soudé à la première portion plate secondaire (220) et
- le premier boulon est raccordé à la première portion plate primaire (120).

4. Support (020) selon l'une quelconque des revendications 1 à 3, dans lequel
- la partie secondaire (200) comprend un deuxième élément de fixation secondaire (232) agencé sur la deuxième portion plate secondaire (230) et configuré pour fonctionner avec le deuxième élément de fixation primaire (132),
- le deuxième élément de fixation primaire (132) et le deuxième élément de fixation secondaire (232) comprennent conjointement un deuxième écrou et un deuxième boulon, dans lequel
- la deuxième portion plate primaire (130) peut être fixée à la deuxième portion plate secondaire (230) en vissant le deuxième boulon au deuxième écrou, et
- la deuxième portion plate primaire (130) peut être séparée de la deuxième portion plate secondaire (230) en dévissant le deuxième boulon ou le deuxième écrou ;
le dispositif de serrage (010) comprenant
- un raccord (190) raccordant la partie primaire (100) à la partie secondaire (200).

5. Support (020) selon la revendication 4, dans lequel
- le deuxième écrou a été fixé, par exemple, soudé, à la deuxième portion plate primaire (130) ou à la deuxième portion plate secondaire (230), et
- le deuxième boulon est raccordé à la deuxième portion plate secondaire (230) ou à la deuxième portion plate primaire (130), respectivement, de telle sorte que le deuxième boulon n'est pas séparable de la deuxième portion plate secondaire (230) ou de la deuxième portion plate primaire (130), respectivement, par dévissage ;
de préférence,
- le deuxième écrou a été soudé à la deuxième portion plate secondaire (230) et
- le deuxième boulon est raccordé à la deuxième portion plate primaire (130).

6. Support (020) selon l'une quelconque des revendications 1 à 5, dans lequel
- l'arc de cercle primaire (A1) s'étend sur un angle (α1) de 90 degrés au moins et inférieur à 180 degrés vu d'un centre du cercle formant l'arc de cercle primaire (A1),
- l'arc de cercle secondaire (A2) s'étend sur un angle (α2) de 90 degrés au moins et inférieur à 180 degrés vu d'un centre du cercle formant l'arc de cercle secondaire (A2) ;
de préférence,
- le rayon (R) est de 15 mm à 40 mm et/ou
- une somme (α1 + α2) des angles d'extension des arcs de cercle primaire et secondaire (α1, α2) est de 270 degrés à 330 degrés.

7. Support (020) selon l'une quelconque des revendications 1 à 6, dans lequel
- la partie primaire (100) est, en outre, définie par :
∘ une première distance primaire (D11) entre une première extrémité transversale (TE11) de la première portion plate primaire (120) et un centre du premier élément de fixation primaire (122) dans le sens longitudinal primaire (DL1) est de 2 cm au moins, et
∘ une deuxième distance primaire (D12) entre une deuxième extrémité transversale (TE12) de la première portion plate primaire (120) et un centre du premier élément de fixation primaire (122) dans le sens longitudinal primaire (DL1) est de 2 cm au moins, et
∘ une troisième distance primaire (D13) entre un centre du premier élément de fixation primaire (122) et la portion semi-tubulaire primaire (110) est de 5 mm au moins ; et
- la partie secondaire (200) est, en outre, définie par :
∘ une première distance secondaire (D21) entre une première extrémité transversale (TE21) de la première portion plate secondaire (220) et un centre du premier élément de fixation secondaire (222) dans le sens longitudinal secondaire (DL2) est de 2 cm au moins,
∘ une deuxième distance secondaire (D22) entre une deuxième extrémité transversale (TE22) de la première portion plate secondaire (220) et un centre du premier élément de fixation secondaire (222) dans le sens longitudinal secondaire (DL2) est de 2 cm au moins, et
∘ une troisième distance secondaire (D23) entre un centre du premier élément de fixation secondaire (222) et la portion semi-tubulaire secondaire (210) est de 5 mm au moins.

8. Support (020) selon l'une quelconque des revendications 1 à 7, dans lequel
- la portion semi-tubulaire primaire (110) est fabriquée en acier ayant une résistance à la déformation de 300 MPa au moins à 20° C,
- une épaisseur primaire (T1) de la portion semi-tubulaire secondaire (110) est de 4 mm à 16 mm ;
- la portion semi-tubulaire secondaire (210) est fabriquée en acier ayant une résistance à la déformation de 300 MPa au moins à 20° C,
- une épaisseur secondaire (T2) de la portion semi-tubulaire secondaire (210) est de 4 mm à 16 mm ;
de préférence
- un côté concave (114) de la portion semi-tubulaire primaire (110) est exempt de revêtement (par exemple, de peinture), et
- un côté concave (214) de la portion semi-tubulaire secondaire (210) est exempt de revêtement (par exemple, de peinture).

9. Support (020) selon l'une quelconque des revendications 1 à 8, dans lequel
[A]
- une distance (D16) entre la première extrémité transversale (TE11) de la première portion plate primaire (120) et la deuxième extrémité transversale (TE21) de la première portion plate primaire (120) est de 10 % à 90 % de la longueur (L1) de la portion semi-tubulaire primaire (110), et/ou
[B]
- une largeur (W11) de la première portion plate primaire (120) est de 15 mm à 40 mm,
- une largeur (W12) de la deuxième portion plate primaire (130) est de 15 mm à 40 mm,
- une largeur (W21) de la première portion plate secondaire (220) est de 15 mm à 40 mm, et
- une largeur (W22) de la deuxième portion plate secondaire (230) est de 15 mm à 40 mm.

10. Support (020) selon l'une quelconque des revendications 1 à 9, dans lequel le deuxième dispositif de serrage (010b) peut être raccordé à un tube cylindrique, le deuxième dispositif de serrage (010b) comprenant
- une partie primaire du deuxième dispositif de serrage (010b) comprenant
∘ une portion semi-tubulaire primaire s'étendant dans un sens longitudinal primaire du deuxième dispositif de serrage (010b),
∘ une première portion plate primaire le long d'un premier côté de la portion semi-tubulaire primaire,
∘ une deuxième portion plate primaire le long d'un deuxième côté de la portion semi-tubulaire primaire, le deuxième côté étant opposé au premier côté,
∘ un premier élément de fixation primaire agencé sur la première portion plate primaire et configuré pour fixer la première portion plate primaire à une première portion plate secondaire du deuxième dispositif de serrage (010b), le premier élément de fixation primaire pouvant s'ouvrir,
∘ un deuxième élément de fixation primaire agencé sur la deuxième portion plate primaire et fixant ou étant configuré pour fixer la deuxième portion plate primaire à une deuxième portion plate secondaire du deuxième dispositif de serrage (010b),
∘ une pièce additionnelle agencée sur un côté convexe de la portion semi-tubulaire primaire, dans lequel
∘ une longueur de la portion semi-tubulaire primaire dans le sens longitudinal primaire du deuxième dispositif de serrage (010b) est de 5 cm au moins,
∘ une distance entre un centre du premier élément de fixation primaire et la pièce additionnelle dans le sens longitudinal primaire du deuxième dispositif de serrage (010b) est de 4 cm au moins,
∘ la pièce additionnelle fait saillie du côté convexe de la portion semi-tubulaire primaire de 25 mm au moins, et
∘ une section transversale de la portion semi-tubulaire primaire définit un arc de cercle primaire d'un cercle ayant un rayon ; et
- une partie secondaire du deuxième dispositif de serrage (010b), comprenant
∘ une portion semi-tubulaire secondaire s'étendant dans un sens longitudinal secondaire du deuxième dispositif de serrage (010b),
∘ une première portion plate secondaire le long d'un premier côté de la portion semi-tubulaire secondaire,
∘ une deuxième portion plate secondaire le long d'un deuxième côté de la portion semi-tubulaire secondaire, le deuxième côté étant opposé au premier côté, et
∘ un premier élément de fixation secondaire agencé sur la première portion plate secondaire et configuré pour fonctionner avec le premier élément de fixation primaire, dans lequel
∘ une longueur de la portion semi-tubulaire secondaire dans le sens longitudinal secondaire du deuxième dispositif de serrage (010b) est de 4 cm au moins, et
∘ une section transversale de la portion semi-tubulaire secondaire définit un arc de cercle secondaire d'un cercle ayant le rayon ; dans lequel
- le premier élément de fixation primaire de la partie primaire du deuxième dispositif de serrage (010b) peut être raccordé au premier élément de fixation secondaire de la partie secondaire du deuxième dispositif de serrage (010b) et en être séparé de telle sorte que le deuxième dispositif de serrage (010b) peut être raccordé à un tube cylindrique depuis un côté du tube cylindrique et
- lors de l'utilisation, le sens longitudinal primaire du deuxième dispositif de serrage (010b) est configuré pour être parallèle au sens longitudinal secondaire du deuxième dispositif de serrage (010b) ;
de préférence,
- le premier dispositif de serrage (010a) et le deuxième dispositif de serrage (010b) sont identiques.

11. Support (020) selon l'une quelconque des revendications 1 à 10, dans lequel
- la deuxième extrémité secondaire tertiaire (324) de la deuxième partie tertiaire (320) est dotée d'une ouverture (325) et
- la première extrémité secondaire tertiaire (314) de la première partie tertiaire (320) est dotée d'un élément de fixation (315) configuré pour s'étendre à travers l'ouverture (325), de sorte que
- la première partie tertiaire (310) ne peut pas être séparée de la deuxième partie tertiaire (320) sans ouvrir l'élément de fixation (315).

12. Plate-forme (030) d'inspection et/ou de maintenance d'un échangeur de chaleur (600, 612), la plate-forme (030) comprenant
- un premier support (020a) selon l'une quelconque des revendications 1 à 11,
- un deuxième support (020b) selon l'une quelconque des revendications 1 à 11, et
- une planche ou un panneau (500) agencé(e) sur le premier support (020a) et le deuxième support (020b), dans laquelle
- une distance (D020) entre le premier support (020a) et le deuxième support (020b) est de 60 cm à 3 m, et
- la planche ou le panneau (500) est essentiellement horizontal(e) ;
de préférence
- le premier support (020a) et le deuxième support (020b) sont identiques.

13. Procédé d'inspection et/ou de maintenance d'un échangeur de chaleur (610, 612) comprenant un premier tube d'échangeur (410), l'échangeur de chaleur ou un autre échangeur de chaleur comprenant un deuxième tube d'échangeur de chaleur (420) ; dans lequel
- un sens longitudinal du premier tube d'échangeur de chaleur (410) est vertical ou forme un angle de 30 degrés au maximum avec un sens vertical, et
- un sens longitudinal du deuxième tube d'échangeur de chaleur (420) est vertical ou forme un angle de 30 degrés au maximum avec un sens vertical,
le procédé comprenant
- la mise à disposition d'un premier support (020, 020a) selon l'une quelconque des revendications 1 à 11,
- la garantie que le premier élément de fixation primaire (122a) du premier dispositif de serrage (010a) est ouvert,
- l'agencement du premier tube d'échangeur de chaleur (410) en lien avec une partie concave de la portion semi-tubulaire primaire du premier dispositif de serrage (010a) et en lien avec une partie concave de la portion semi-tubulaire secondaire du premier dispositif de serrage (010a),
- la fixation du premier dispositif de serrage (010a) au premier tube d'échangeur de chaleur (410) par fixation du premier élément de fixation primaire (122a) du premier dispositif de serrage (010a),
- la garantie que le premier élément de fixation primaire (122b) du deuxième dispositif de serrage (010b) est ouvert,
- l'agencement du deuxième tube d'échangeur de chaleur (420) en lien avec une partie concave de la portion semi-tubulaire primaire du deuxième dispositif de serrage (010b) et en lien avec une partie concave de la portion semi-tubulaire secondaire du deuxième dispositif de serrage (010b) et
- la fixation du deuxième dispositif de serrage (010b) au deuxième tube d'échangeur de chaleur (420) par fixation du premier élément de fixation primaire (122b) du deuxième dispositif de serrage (010b),
- la fixation du premier élément de fixation tertiaire (313) de la barre de support (300) à la pièce additionnelle (140a) du premier dispositif de serrage (010a), et
- la fixation du deuxième élément de fixation tertiaire (323) de la barre de support (300) à la pièce additionnelle (140b) du deuxième dispositif de serrage (010b), et
- l'inspection et/ou la maintenance de l'échangeur de chaleur (600, 612) en utilisant le support (020).

14. Procédé selon la revendication 13, dans lequel
- le premier élément de fixation primaire (122a) du premier dispositif de serrage (010a) est fixé d'une manière telle qu'une force de compression (FC) entre le premier dispositif de serrage (010a) et le premier tube d'échangeur de chaleur (410) est de 5 kN au moins, par exemple, de 5 kN à 100 kN, de préférence de 5 kN à 20 kN ;
de préférence aussi
- le premier élément de fixation primaire (122b) du deuxième dispositif de serrage (010b) est fixé d'une manière telle qu'une force de compression (FC) entre le deuxième dispositif de serrage (010b) et le deuxième tube d'échangeur de chaleur (420) est de 5 kN au moins, par exemple, de 5 kN à 100 kN, de préférence de 5 kN à 20 kN.

15. Procédé selon la revendication 13 ou 14, dans lequel
- le premier élément de fixation primaire (122a) du premier dispositif de serrage (010a) est fixé de telle sorte qu'un rapport de (i) une première force de fixation (FF1) du premier élément de fixation primaire (122) du premier dispositif de serrage (010a) à (ii) une deuxième force de fixation (FF2) du deuxième élément de fixation primaire (132) du premier dispositif de serrage (010a) est de 1/3 à 3 ; de préférence, de 0,75 à 1,3.

16. Procédé selon l'une quelconque des revendications 13 à 15, comprenant
- après l'inspection et/ou la maintenance de l'échangeur de chaleur (600, 612), la séparation de la barre de support (300) des premier et deuxième dispositifs de serrage (010a, 010b), la séparation du premier dispositif de serrage (010a) du premier tube d'échangeur de chaleur (410), et la séparation du deuxième dispositif de serrage (010b) du deuxième tube d'échangeur de chaleur (420).

17. Procédé selon l'une quelconque des revendications 13 à 16, comprenant
- la mise à disposition d'un deuxième support (020b) selon l'une quelconque des revendications 1 à 11,
- la fixation du premier dispositif de serrage du deuxième support (020b) à un troisième tube d'échangeur de chaleur (430) en fixant le premier élément de fixation primaire du premier dispositif de serrage du deuxième support (020b),
- la fixation du deuxième dispositif de serrage du deuxième support (020b) à un quatrième tube d'échangeur de chaleur (440) par fixation du premier élément de fixation primaire du deuxième dispositif de serrage du deuxième support (020b),
- la fixation du premier élément de fixation tertiaire de la barre de support du deuxième support (020b) à la pièce additionnelle du premier dispositif de serrage du deuxième support (020b),
- la fixation du deuxième élément de fixation tertiaire de la barre de support du deuxième support (020b) à la pièce additionnelle du deuxième dispositif de serrage du deuxième support (020b),
- l'agencement d'une planche ou d'un panneau (500) sur la barre de support (300) du support (020, 020a) et sur la barre de support du deuxième support (020b), et
- l'inspection et/ou la maintenance de l'échangeur de chaleur (610, 612) tandis qu'il est soutenu par la planche ou le panneau (500).

18. Procédé selon l'une quelconque des revendications 13 à 17, dans lequel
- l'échangeur de chaleur (610, 612) est un surchauffeur d'une chaudière (600) tel qu'un surchauffeur (610, 612) d'une chaudière de récupération chimique (600) ou un surchauffeur (610, 612) d'une chaudière à lit fluidisé bouillonnant (600).
